# EUROPEAN PATENT APPLICATION

(11) **EP 4 645 921 A1**
(43) Date of publication of application: **05.11.2025**
(21) Application number: 24741265.3
(22) Date of filing: 10.01.2024
(51) Int. Cl.: H04W 8/24

(54) **COMMUNICATION METHOD AND COMMUNICATION APPARATUS**

(30) Priority: 10.01.2023 CN 202310031570; 06.07.2023 CN 202310829342
(71) Applicant: Huawei Technologies Co., Ltd., Shenzhen, Guangdong 518129 (CN)
(72) Inventor: DU, Rui, Shenzhen, Guangdong 518129 (CN); XIN, Yan, Shenzhen, Guangdong 518129 (CN); NAREN, Gerile, Shenzhen, Guangdong 518129 (CN); HU, Mengshi, Shenzhen, Guangdong 518129 (CN); HAN, Xiao, Shenzhen, Guangdong 518129 (CN)
(74) Representative: Körber, Martin Hans
(86) International application number: PCT/CN2024/071471
(87) International publication number: WO 2024/149268

(57) **Abstract**

This application provides a communication method and a communication apparatus. The method may be applied to the sensing field. The method includes: sending a request frame 1, where the request frame 1 is used to request a station 1 to participate in a sensing measurement instance; and sending a request frame 2 when no response frame 1 is received, where the request frame 2 is used to request a station 2 to participate in the sensing measurement instance. The response frame 1 is a response to the request frame 1, and there is an interval of one time period between a sending time of the request frame 2 and a sending time of the request frame 1. The request frames are periodically sent, so that this application can avoid adverse impact, caused by a station that fails in a handshake (which is a process of sending a request frame and replying with a response frame), on alignment of sending times of physical layer protocol data units of stations that succeed in handshakes.

## Description

This application claims priorities to Chinese Patent Application No. 202310031570.6, filed with the China National Intellectual Property Administration on January 10, 2023 and entitled "COMMUNICATION METHOD AND COMMUNICATION APPARATUS", and to Chinese Patent Application No. 202310829342.3, filed with the China National Intellectual Property Administration on July 6, 2023 and entitled "COMMUNICATION METHOD AND COMMUNICATION APPARATUS", both of which are incorporated herein by reference in their entireties.

### TECHNICAL FIELD

This application relates to the field of communication technologies, and more specifically, to a communication method and a communication apparatus.

### BACKGROUND

A signal sent by a Wi-Fi device is usually received by another device after being reflected, diffracted, and scattered by various obstacles. In this case, a signal received by the another device is usually obtained by superimposing a plurality of signals. This facilitates sensing, by using a radio signal, a physical environment through which the radio signal passes, and a sensing (sensing) technology is derived accordingly.

In the sensing technology, a sensing initiator (for example, an access point (access point, AP)) establishes a sensing relationship with a plurality of sensing responders (for example, stations (stations, STAs)). Specifically, the sensing initiator sends a request frame to the plurality of sensing responders, to request a sensing receiver to participate in a sensing measurement instance, and then the sensing responder sends a response frame to the sensing initiator, to respond to the request frame. Then, the plurality of sensing responders simultaneously send physical layer protocol data units (physical layer protocol data units, PPDUs), to complete sensing.

However, if a part of the plurality of sensing responders fail to complete the foregoing process (described as a handshake below), simultaneous sending of PPDUs of sensing responders that successfully complete handshakes is affected, resulting a sensing failure.

### SUMMARY

This application provides a communication method and a communication apparatus, to avoid adverse impact, caused by a station that fails in a handshake (which is a process of sending a request frame and replying with a response frame), on alignment of sending times of PPDUs of stations that succeed in handshakes.

According to a first aspect, a communication method is provided, including: sending a first request frame, where the first request frame is used to request a first station to participate in a sensing measurement instance; and sending a second request frame when no first response frame is received, where the second request frame is used to request a second station to participate in the sensing measurement instance. The first response frame is a response to the first request frame, and there is an interval of one time period between a sending time of the second request frame and a sending time of the first request frame.

Specifically, the first request frame and the second request frame are any two adjacently sent request frames, and are respectively used to request the corresponding stations to participate in the sensing measurement instance. When an access point receives no first response frame, the access point sends the second request frame to the second station based on one time period, that is, there is the interval of one time period between the sending time of the second request frame and the sending time of the first request frame. In other words, the access point waits to receive the first response frame within the time period, and whether the access point successfully receives the first response frame within the time period does not affect sending of the second request frame. This can avoid impact of a failure to receive the first response frame on the sending time of the second request frame, and can avoid impact, caused by a station (for example, the first station) that fails in a handshake, on simultaneous sending of PPDUs of stations that succeed in handshakes, to complete sensing.

In a possible implementation, that there is the interval of one time period between the sending time of the first request frame and the sending time of the second request frame may include: A time length between an initial time (or a moment) of the sending time of the first request frame and an initial time (or a moment) of the sending time of the second request frame is equal to the time period P, or a time length between an end time (or a moment) of the sending time of the first request frame and an end time (or a moment) of the sending time of the second request frame is equal to the time period P; or a time length between an initial time (or a moment) of the sending time of the first request frame and an end time (or a moment) of the sending time of the second request frame is equal to the time period P, or a time length between an end time (or a moment) of the sending time of the first request frame and an initial time (or a moment) of the sending time of the second request frame is equal to the time period P. This is not limited in this application. The request frames have a same time length. For ease of description, the following uses an example in which the time period P is equal to a time interval between the end time (or the moment) of the sending time of the first request frame and the initial time (or the moment) of the sending time of the second request frame for description. However, another scenario is not limited.

In conclusion, the request frame is periodically sent, so that simultaneous sending times that are of PPDUs and that are determined, based on respective request frames, by stations that succeed in handshakes are consistent, and are not affected by a station that fails in a handshake. This can avoid adverse impact, caused by the station that fails in the handshake, on alignment of the sending times of the PPDUs of the stations that succeed in the handshakes.

In a possible implementation, that no first response frame is received includes: receiving no first response frame in a first time; and sending the second request frame includes: sending the second request frame after a second time elapses. A sum of the first time and the second time is equal to the time period.

Specifically, when the access point receives no first response frame in the first time after completing sending of the first request frame, the access point continues to wait for the second time, and the sum of the first time and the second time is equal to the time period. This can avoid adverse impact, caused by a station that fails in a handshake, on alignment of sending times of PPDUs of stations that succeed in handshakes.

In a possible implementation, the time period includes a time length of one response frame and a time length of two interframe spaces.

In a possible implementation, the method further includes: sending a second PPDU, where the second PPDU is used for time synchronization between stations. The first request frame includes indication information, and the indication information indicates a length of a synchronization padding subfield of the second PPDU.

In this way, the first station and the second station can complete time synchronization based on the second PPDU. This also avoids adverse impact, caused by a station that fails in a handshake, on alignment of sending times of PPDUs of stations that succeed in handshakes.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

In this way, the first station can complete sensing based on the training field in the second PPDU. In addition, based on the second PPDU, this application further supports a multistatic sensing scenario.

According to a second aspect, a communication method is provided, including: sending a second request frame based on a time period when no first response frame is received, where the second request frame is used to request a second station to participate in a sensing measurement instance, there is an interval of the time period between a sending time of the second request frame and a sending time of a first request frame, the first request frame is used to request a first station to participate in the sensing measurement instance, and the first response frame is a response to the first request frame; and receiving a second response frame, where the second response frame is a response to the second request frame.

Specifically, the first request frame and the second request frame are any two adjacently sent request frames, and are respectively used to request the corresponding stations to participate in the sensing measurement instance. When an access point receives no first response frame, the access point sends the second request frame to the second station based on the time period, that is, there is the interval of the time period between the sending time of the second request frame and the sending time of the first request frame. In other words, the access point waits to receive the first response frame within the time period, and whether the access point successfully receives the first response frame within the time period does not affect sending of the second request frame. This can avoid impact of a failure to receive the first response frame on the sending time of the second request frame, and can avoid impact, caused by a station (for example, the first station) that fails in a handshake, on simultaneous sending of PPDUs of stations that succeed in handshakes, to complete sensing.

In conclusion, periodically sending each request frame can avoid adverse impact, caused by a station that fails in a handshake, on alignment of sending times of PPDUs of stations that succeed in handshakes.

In a possible implementation, that no first response frame is received includes: receiving no first response frame in a first time; and sending the second request frame based on the time period includes: sending the second request frame after a second time elapses. A sum of the first time and the second time is equal to the time period.

Specifically, when the access point receives no first response frame in the first time after completing sending of the first request frame, the access point continues to wait for the second time, and the sum of the first time and the second time is equal to the time period. This can avoid adverse impact, caused by a station that fails in a handshake, on alignment of sending times of PPDUs of stations that succeed in handshakes.

In a possible implementation, the time period includes a time length of one response frame and a time length of two interframe spaces.

In a possible implementation, the method further includes: sending a second PPDU, where the second PPDU is used for time synchronization between stations. The first request frame includes indication information, and the indication information indicates a length of a synchronization padding subfield of the second PPDU. In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a third aspect, a communication method is provided, including: sending a first request frame, where the first request frame is used to request a first station to participate in a sensing measurement instance, the first request frame includes an indication field, and the indication field indicates a time at which the first station sends a first PPDU; and receiving a first response frame, where the first response frame is a response to the first request frame.

Specifically, sending times that are of PPDUs and that are indicated by indication fields in request frames may be different or may be the same. For example, an example in which the times are different is used for description. For the first station, the sending time that is of the PPDU and that is indicated by the indication field in the first request frame is t1 (for example, 10 seconds later). For a second station, a sending time that is of a PPDU and that is indicated by an indication field in a second request frame is t2 (for example, 5 seconds later). However, the first station and the second station may send the PPDUs at a same time, to complete sensing. This can avoid adverse impact, caused by a station that fails in a handshake, on alignment of sending times of PPDUs of stations that succeed in handshakes.

In a possible implementation, the first request frame is sent when no second response frame is received in a first time, the second response frame is a response to the second request frame, and the second request frame is used to request the second station to participate in the sensing measurement instance.

Specifically, when an access point receives no second response frame in the first time after completing sending of the second request frame, the access point sends the first request frame to the first station in advance. However, because the indication field in the first request frame indicates the sending time of the first PPDU to the first station, the first station may send the PPDU based on the sending time that is of the PPDU and that is indicated by the indication field in the first request frame, and the first station and another station that succeeds in a handshake can simultaneously send PPDUs. This avoids adverse impact, caused by the second station that fails in a handshake, on alignment of sending times of the PPDUs of the first station and the another station that succeeds in the handshake.

In a possible implementation, the indication field includes information about the sending time of the first PPDU; or the indication field includes a number of stations from which the access point receives no response frame before the first request frame is sent.

Specifically, the information about the sending time of the first PPDU may include the sending time of the first PPDU, or may include a waiting time elapsing after the first station completes sending of the first response frame. This is not limited. In addition, the number that is indicated by the indication field and that are of stations from which the access point receives no the response frame may also be used by the first station to determine the sending time of the first PPDU.

In a possible implementation, the method further includes: sending a second PPDU, where the second PPDU is used for time synchronization between stations. The first request frame includes indication information, and the indication information indicates a length of a synchronization padding subfield of the second PPDU.

In this way, the first station and the second station can complete time synchronization based on the second PPDU. This also avoids adverse impact, caused by a station that fails in a handshake, on alignment of sending times of PPDUs of stations that succeed in handshakes.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

In this way, the first station can complete sensing based on the training field in the second PPDU. In addition, based on the second PPDU, this application further supports a multistatic sensing scenario.

According to a fourth aspect, a communication method is provided, including: sending a first request frame, where the first request frame is used to request a first station to participate in a sensing measurement instance, the first request frame includes an indication field, the indication field indicates a time length corresponding to padding of a first response frame, and the first response frame is a response to the first request frame; and receiving the first response frame.

Specifically, if an access point successfully completes a handshake with a second station before sending the first request frame, the time length corresponding to the padding of the first response frame may be 0. If the access point fails to complete the handshake with the second station before sending the first request frame, the time length corresponding to the padding of the first response frame is not 0, and the time length is associated with a time interval between a sending time of the first request frame and a sending time of a second request frame. Further, this can avoid adverse impact, caused by a station (for example, the second station) that fails in a handshake, on alignment of sending times of PPDUs of stations (for example, the first station) that succeed in handshakes.

In a possible implementation, the first request frame is sent when no second response frame is received in a first time, the second response frame is a response to the second request frame, and the second request frame is used to request the second station to participate in the sensing measurement instance.

In a possible implementation, the indication field includes a number of stations from which the access point receives no response frame before the first request frame is sent.

In a possible implementation, the method further includes: sending a second PPDU, where the second PPDU is used for time synchronization between stations. The first request frame includes indication information, and the indication information indicates a length of a synchronization padding subfield of the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a fifth aspect, a communication method is provided, including: determining a first PPDU, where the first PPDU is used for time synchronization between stations, the first PPDU includes a synchronization field, the synchronization field includes a synchronization padding subfield and at least one synchronization subfield, and the synchronization padding subfield is before the at least one synchronization subfield; and sending the first PPDU.

In this way, all the stations can perform time synchronization based on length information of the synchronization padding subfield in the first PPDU. This can avoid adverse impact, caused by a station that fails in a handshake, on alignment of sending times of PPDUs of stations that succeed in handshakes.

In a possible implementation, the first PPDU further includes a header field and a data field.

In a possible implementation, the first PPDU further includes a training field, and the training field is used for sensing.

According to a sixth aspect, a communication method is provided, including: determining a first PPDU, where the first PPDU is used for time synchronization between stations, the first PPDU includes a data field and a synchronization field, and a length of the data field is fixed; or a length of the data field is an integer multiple of a single carrier coding block; or a length of the synchronization field is an integer multiple of the length of the single carrier coding block; or a length sum of the synchronization field and the data field is an integer multiple of the length of the single carrier coding block; and sending the first PPDU.

In a possible implementation, the first PPDU further includes a header field.

In a possible implementation, the first PPDU further includes a training field, and the training field is used for sensing.

According to a seventh aspect, a communication method is provided, including: sending a first request frame, where the first request frame is used to request a first station to participate in a sensing measurement instance; and sending a second request frame when no first response frame is received, where the second request frame is used to request a second station to participate in the sensing measurement instance. The first response frame is used to respond to the first request frame; and the second request frame is a request frame obtained through first padding, the second request frame includes first information, and the first information indicates a length, obtained before the first padding, of the second request frame.

The information indicating the length, obtained before the first padding, of the second request frame helps a receive end determine an accurate PPDU sending time based on the length, obtained before the first padding, of the second request frame, so that the receive end can keep a PPDU sending time aligned with that of another station that succeeds in a handshake.

In a possible implementation, the first information includes a length corresponding to the first padding.

In this way, the receive end can determine information about the length, obtained before the first padding, of the second request frame.

In a possible implementation, the first information includes an air interface length, obtained before the first padding, of the second request frame.

In this way, the receive end can determine information about the length, obtained before the first padding, of the second request frame.

In a possible implementation, the first information includes a number, obtained before the first padding, of symbol blocks in the second request frame.

In this way, the receive end can determine information about the length, obtained before the first padding, of the second request frame.

According to an eighth aspect, a communication method is provided, including: receiving a first request frame, where the first request frame is used to request a first station to participate in a sensing measurement instance, the first request frame includes an indication field, and the indication field indicates a sending time of a first PPDU; and sending a first response frame, where the first response frame is a response to the first request frame.

In a possible implementation, the first request frame is sent when no second response frame is received in a first time, the second response frame is a response to a second request frame, and the second request frame is used to request a second station to participate in the sensing measurement instance.

In a possible implementation, the indication field includes information about the sending time of the first PPDU; or the indication field includes a number of stations from which an access point receives no response frame before the first request frame is sent.

In a possible implementation, the sending time of the first PPDU=(NSTA-STA ID)*(2*short interframe space+time length of one request frame+time length of one response frame)+N*(time length of one response frame+2*time length of a short interframe space-T), where N indicates the number of stations from which the access point receives no response frame, T indicates the first time (or T indicates a time interval between a sending time of the first request frame and a sending time of the second request frame, and the second request frame is used to request the second station to participate in the sensing measurement instance), NSTA indicates a number of stations participating in the sensing measurement instance, and STA ID indicates a ranking of the first station in the number of stations participating in the sensing measurement instance.

In a possible implementation, the method further includes: receiving a second PPDU, where the second PPDU is used for time synchronization between stations, the first request frame includes indication information, and the indication information indicates a length of a synchronization padding subfield of the second PPDU; and performing time synchronization based on the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a ninth aspect, a communication method is provided, including: receiving a first request frame, where the first request frame is used to request a first station to participate in a sensing measurement instance, the first request frame includes an indication field, the indication field indicates a time length corresponding to padding of a first response frame, and the first response frame is a response to the first request frame; and sending the first response frame.

In a possible implementation, the first request frame is sent when no second response frame is received in a first time, the second response frame is a response to a second request frame, and the second request frame is used to request a second station to participate in the sensing measurement instance.

In a possible implementation, the indication field indicates a number of stations from which an access point receives no response frame before the first request frame is sent.

In a possible implementation, the time length corresponding to the padding of the first response frame=N*(time length of one response frame+2*time length of an interframe space-T), where N indicates the number of stations from which the access point receives no response frame, T indicates a waiting time for receiving the second response frame (or T indicates a time interval between a sending time of the first request frame and a sending time of the second request frame, and the second request frame is used to request the second station to participate in the sensing measurement instance), the second response frame is a response to the second request frame, and the second request frame is used to request the second station to participate in the sensing measurement instance.

In a possible implementation, the method further includes: receiving a second PPDU, where the second PPDU is used for time synchronization between stations; and performing time synchronization based on the second PPDU. The first request frame includes indication information, and the indication information indicates a time length of a synchronization padding subfield of the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a tenth aspect, a communication method is provided, including: receiving a first PPDU, where the first PPDU is used for time synchronization between stations, the first PPDU includes a synchronization field, the synchronization field includes a synchronization padding subfield and at least one synchronization subfield, and the synchronization padding subfield is before the at least one synchronization subfield; and performing time synchronization based on the first PPDU.

In a possible implementation, the first PPDU further includes a header field and a data field.

In a possible implementation, the first PPDU further includes a training field, and the training field is used for sensing.

According to an eleventh aspect, a communication method is provided, including: receiving a first PPDU, where the first PPDU is used for time synchronization between stations, the first PPDU includes a data field and a synchronization field, and a length of the data field is fixed; or a length of the data field is an integer multiple of a single carrier coding block; or a length of the synchronization field is an integer multiple of the length of the single carrier coding block; or a length sum of the synchronization field and the data field is an integer multiple of the length of the single carrier coding block; and performing time synchronization based on the first PPDU.

In a possible implementation, the first PPDU further includes a header field.

In a possible implementation, the first PPDU further includes a training field, and the training field is used for sensing.

According to a twelfth aspect, a communication method is provided, including: receiving a first request frame, where the first request frame is used to request a second station to participate in a sensing measurement instance, the first request frame is a request frame obtained through first padding, the first request frame includes first information, and the first information indicates a length, obtained before the first padding, of the first request frame; and determining a sending time of a first PPDU based on the first information, where the sending time of the first PPDU is aligned with a sending time of a second PPDU, the second PPDU is a PPDU sent by the second station, and the second station is a station that succeeds in a handshake.

In a possible implementation, the first information includes a length corresponding to the first padding.

In a possible implementation, the first information includes an air interface length, obtained before the first padding, of the first request frame.

In a possible implementation, the first information includes a number, obtained before the first padding, of symbol blocks in the first request frame.

According to a thirteenth aspect, a communication apparatus is provided, configured to perform the method according to the first aspect. In a design, the apparatus may include a module/unit that is in one-to-one correspondence with the method/operation/step/action described in the first aspect. The module/unit may be implemented by a hardware circuit, software, or a combination of the hardware circuit and software. In another design, the apparatus includes a transceiver unit, configured to send a first request frame, where the first request frame is used to request a first station to participate in a sensing measurement instance. The transceiver unit is further configured to send a second request frame when no first response frame is received, where the second request frame is used to request a second station to participate in the sensing measurement instance. The first response frame is a response to the first request frame, and there is an interval of one time period between a sending time of the second request frame and a sending time of the first request frame.

In a possible implementation, the transceiver unit is further configured to receive no first response frame in a first time; and the transceiver unit is further configured to send the second request frame after a second time elapses. A sum of the first time and the second time is equal to the time period.

In a possible implementation, the time period includes a time length of one response frame and a time length of two interframe spaces.

In a possible implementation, the transceiver unit is further configured to send a second PPDU, where the second PPDU is used for time synchronization between stations. The first request frame includes indication information, and the indication information indicates a length of a synchronization padding subfield of the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a fourteenth aspect, a communication apparatus is provided, configured to perform the method according to the second aspect. In a design, the apparatus may include a module/unit that is in one-to-one correspondence with the method/operation/step/action described in the second aspect. The module/unit may be implemented by a hardware circuit, software, or a combination of the hardware circuit and software. In another design, the apparatus includes a transceiver unit, configured to: send a second request frame based on a time period when no first response frame is received, where the second request frame is used to request a second station to participate in a sensing measurement instance. There is an interval of the time period between a sending time of the second request frame and a sending time of a first request frame, the first request frame is used to request a first station to participate in the sensing measurement instance, and the first response frame is a response to the first request frame. The transceiver unit is further configured to receive a second response frame, where the second response frame is a response to the second request frame.

In a possible implementation, the transceiver unit is further configured to receive no first response frame in a first time; and the transceiver unit is further configured to send the second request frame after a second time elapses. A sum of the first time and the second time is equal to the time period.

In a possible implementation, the time period includes a time length of one response frame and a time length of two interframe spaces.

In a possible implementation, the transceiver unit is further configured to send a second PPDU, where the second PPDU is used for time synchronization between stations. The first request frame includes indication information, and the indication information indicates a length of a synchronization padding subfield of the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a fifteenth aspect, a communication apparatus is provided, configured to perform the method according to the third aspect. In a design, the apparatus may include a module/unit that is in one-to-one correspondence with the method/operation/step/action described in the third aspect. The module/unit may be implemented by a hardware circuit, software, or a combination of the hardware circuit and software. In another design, the apparatus includes a transceiver unit, configured to send a first request frame, where the first request frame is used to request a first station to participate in a sensing measurement instance, the first request frame includes an indication field, and the indication field indicates a time at which the first station sends a first PPDU. The transceiver unit is further configured to receive a first response frame, where the first response frame is a response to the first request frame.

In a possible implementation, the first request frame is sent when no second response frame is received in a first time, the second response frame is a response to a second request frame, and the second request frame is used to request a second station to participate in the sensing measurement instance.

In a possible implementation, the indication field includes information about the sending time of the first PPDU; or the indication field includes a number of stations from which an access point receives no response frame before the first request frame is sent.

In a possible implementation, the transceiver unit is further configured to send a second PPDU, where the second PPDU is used for time synchronization between stations. The first request frame includes indication information, and the indication information indicates a length of a synchronization padding subfield of the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a sixteenth aspect, a communication apparatus is provided, configured to perform the method according to the fourth aspect. In a design, the apparatus may include a module/unit that is in one-to-one correspondence with the method/operation/step/action described in the fourth aspect. The module/unit may be implemented by a hardware circuit, software, or a combination of the hardware circuit and software. In another design, the apparatus includes a transceiver unit, configured to send a first request frame, where the first request frame is used to request a first station to participate in a sensing measurement instance, the first request frame includes an indication field, the indication field indicates a time length corresponding to padding of a first response frame, and the first response frame is a response to the first request frame. The transceiver unit is further configured to receive the first response frame.

In a possible implementation, the first request frame is sent when no second response frame is not received in a first time, the second response frame is a response to a second request frame, and the second request frame is used to request a second station to participate in the sensing measurement instance.

In a possible implementation, the indication field includes a number of stations from which an access point receives no response frame before the first request frame is sent.

In a possible implementation, the transceiver unit is further configured to send a second PPDU, where the second PPDU is used for time synchronization between stations. The first request frame includes indication information, and the indication information indicates a length of a synchronization padding subfield of the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a seventeenth aspect, a communication apparatus is provided, configured to perform the method according to the fifth aspect. In a design, the apparatus may include a module/unit that is in one-to-one correspondence with the method/operation/step/action described in the fifth aspect. The module/unit may be implemented by a hardware circuit, software, or a combination of the hardware circuit and software. In another design, the apparatus includes: a processing unit, configured to determine a first PPDU, where the first PPDU is used for time synchronization between stations, the first PPDU includes a synchronization field, the synchronization field includes a synchronization padding subfield and at least one synchronization subfield, and the synchronization padding subfield is before the at least one synchronization subfield; and a transceiver unit, configured to send the first PPDU.

In a possible implementation, the first PPDU further includes a header field and a data field.

In a possible implementation, the first PPDU further includes a training field, and the training field is used for sensing.

According to an eighteenth aspect, a communication apparatus is provided, configured to perform the method according to the sixth aspect. In a design, the apparatus may include a module/unit that is in one-to-one correspondence with the method/operation/step/action described in the sixth aspect. The module/unit may be implemented by a hardware circuit, software, or a combination of the hardware circuit and software. In another design, the apparatus includes: a processing unit, configured to determine a first PPDU, where the first PPDU is used for time synchronization between stations, the first PPDU includes a data field and a synchronization field, and a length of the data field is fixed; or a length of the data field is an integer multiple of a single carrier coding block; or a length of the synchronization field is an integer multiple of the length of the single carrier coding block; or a length sum of the synchronization field and the data field is an integer multiple of the length of the single carrier coding block; and a transceiver unit, configured to send the first PPDU.

In a possible implementation, the first PPDU further includes a header field.

In a possible implementation, the first PPDU further includes a training field, and the training field is used for sensing.

According to a nineteenth aspect, a communication apparatus is provided, configured to perform the method according to the seventh aspect. In a design, the apparatus may include a module/unit that is in one-to-one correspondence with the method/operation/step/action described in the seventh aspect. The module/unit may be implemented by a hardware circuit, software, or a combination of the hardware circuit and software. In another design, the apparatus includes a transceiver unit, configured to send a first request frame, where the first request frame is used to request a first station to participate in a sensing measurement instance. The transceiver unit is configured to send a second request frame when no first response frame is received, where the second request frame is used to request a second station to participate in the sensing measurement instance. The first response frame is used to respond to the first request frame; and the second request frame is a request frame obtained through first padding, the second request frame includes first information, and the first information indicates a length, obtained before the first padding, of the second request frame.

In a possible implementation, the first information includes a length corresponding to the first padding.

In a possible implementation, the first information includes an air interface length, obtained before the first padding, of the second request frame.

In a possible implementation, the first information includes a number, obtained before the first padding, of symbol blocks in the second request frame.

According to a twentieth aspect, a communication apparatus is provided, configured to perform the method according to the eighth aspect. In a design, the apparatus may include a module/unit that is in one-to-one correspondence with the method/operation/step/action described in the eighth aspect. The module/unit may be implemented by a hardware circuit, software, or a combination of the hardware circuit and software. In another design, the apparatus includes a transceiver unit, configured to receive a first request frame, where the first request frame is used to request a first station to participate in a sensing measurement instance, the first request frame includes an indication field, and the indication field indicates a sending time of a first PPDU. The transceiver unit is further configured to send a first response frame, where the first response frame is a response to the first request frame.

In a possible implementation, the first request frame is sent when no second response frame is received in a first time, the second response frame is a response to a second request frame, and the second request frame is used to request a second station to participate in the sensing measurement instance.

In a possible implementation, the indication field includes information about the sending time of the first PPDU; or the indication field includes a number of stations from which an access point receives no response frame before the first request frame is sent.

In a possible implementation, the sending time of the first PPDU=(NSTA-STA ID)*(2*short interframe space+time length of one request frame+time length of one response frame)+N*(time length of one response frame+2*time length of a short interframe space T), where N indicates the number of stations from which the access point receives no response frame, T indicates the first time (or T indicates a time interval between a sending time of the first request frame and a sending time of the second request frame, and the second request frame is used to request the second station to participate in the sensing measurement instance), NSTA indicates a number of stations participating in the sensing measurement instance, and STA ID indicates a ranking of the first station in the number of stations participating in the sensing measurement instance.

In a possible implementation, the transceiver unit is further configured to receive a second PPDU, where the second PPDU is used for time synchronization between stations. The first request frame includes indication information, and the indication information indicates a length of a synchronization padding subfield of the second PPDU. A processing unit is configured to perform time synchronization based on the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a twenty-first aspect, a communication apparatus is provided, configured to perform the method according to the ninth aspect. In a design, the apparatus may include a module/unit that is in one-to-one correspondence with the method/operation/step/action described in the ninth aspect. The module/unit may be implemented by a hardware circuit, software, or a combination of the hardware circuit and software. In another design, the apparatus includes a transceiver unit, configured to receive a first request frame, where the first request frame is used to request a first station to participate in a sensing measurement instance, the first request frame includes an indication field, and the indication field indicates a time length corresponding to padding of a first response frame. The transceiver unit is further configured to send the first response frame, where the first response frame is a response to the first request frame.

In a possible implementation, the first request frame is sent when no second response frame is received in a first time, the second response frame is a response to a second request frame, and the second request frame is used to request a second station to participate in the sensing measurement instance.

In a possible implementation, the indication field indicates a number of stations from which an access point receives no response frame before the first request frame is sent.

In a possible implementation, the time length corresponding to the padding of the first response frame=N*(time length of one response frame+2*time length of an interframe space-T), where N indicates the number of stations from which the access point receives no response frame, T indicates a waiting time for receiving the second response frame (or T indicates a time interval between a sending time of the first request frame and a sending time of the second request frame, and the second request frame is used to request the second station to participate in the sensing measurement instance), the second response frame is a response to the second request frame, and the second request frame is used to request the second station to participate in the sensing measurement instance.

In a possible implementation, the transceiver unit is further configured to receive a second PPDU, where the second PPDU is used for time synchronization between stations. A processing unit is further configured to perform time synchronization based on the second PPDU. The first request frame includes indication information, and the indication information indicates a time length of a synchronization padding subfield of the second PPDU.

In a possible implementation, the second PPDU further includes a data field, a synchronization field, a physical layer service data unit PSDU subfield, and a modulation and coding scheme MCS subfield, the synchronization field includes the synchronization padding subfield, and the indication information includes at least one of the following: a length of the synchronization padding subfield, a length of the synchronization field, a length of the data field, a length sum of the synchronization field and the data field, or the PSDU subfield and the MCS subfield, where the PSDU subfield and the MCS subfield are used to determine the length sum.

In a possible implementation, the second PPDU further includes a training field, and the training field is used for sensing.

According to a twenty-second aspect, a communication apparatus is provided, configured to perform the method according to the tenth aspect. In a design, the apparatus may include a module/unit that is in one-to-one correspondence with the method/operation/step/action described in the tenth aspect. The module/unit may be implemented by a hardware circuit, software, or a combination of the hardware circuit and software. In another design, the apparatus includes: a transceiver unit, configured to receive a first PPDU, where the first PPDU is used for time synchronization between stations, the first PPDU includes a synchronization field, the synchronization field includes a synchronization padding subfield and at least one synchronization subfield, and the synchronization padding subfield is before the at least one synchronization subfield; and a processing unit, configured to perform time synchronization based on the first PPDU.

In a possible implementation, the first PPDU further includes a header field and a data field.

In a possible implementation, the first PPDU further includes a training field, and the training field is used for sensing.

According to a twenty-third aspect, a communication apparatus is provided, configured to perform the method according to the eleventh aspect. In a design, the apparatus may include a module/unit that is in one-to-one correspondence with the method/operation/step/action described in the second aspect. The module/unit may be implemented by a hardware circuit, software, or a combination of the hardware circuit and software. In another design, the apparatus includes: a transceiver unit, configured to receive a first PPDU, where the first PPDU is used for time synchronization between stations, the first PPDU includes a data field and a synchronization field, and a length of the data field is fixed; or a length of the data field is an integer multiple of a single carrier coding block; or a length of the synchronization field is an integer multiple of the length of the single carrier coding block; or a length sum of the synchronization field and the data field is an integer multiple of the length of the single carrier coding block; and a processing unit, configured to perform time synchronization based on the first PPDU.

In a possible implementation, the first PPDU further includes a header field.

In a possible implementation, the first PPDU further includes a training field, and the training field is used for sensing.

According to a twenty-fourth aspect, a communication apparatus is provided, configured to perform the method according to the twelfth aspect. In a design, the apparatus may include a module/unit that is in one-to-one correspondence with the method/operation/step/action described in the twelfth aspect. The module/unit may be implemented by a hardware circuit, software, or a combination of the hardware circuit and software. In another design, the apparatus includes: a transceiver unit, configured to receive a first request frame, where the first request frame is used to request a second station to participate in a sensing measurement instance, the first request frame is a request frame obtained through first padding, the first request frame includes first information, and the first information indicates a length, obtained before the first padding, of the first request frame; and a processing unit, configured to determine a sending time of a first PPDU based on the first information, where the sending time of the first PPDU is aligned with a sending time of a second PPDU, the second PPDU is a PPDU sent by the second station, and the second station is a station that succeeds in a handshake.

In a possible implementation, the first information includes a length corresponding to the first padding.

In a possible implementation, the first information includes an air interface length, obtained before the first padding, of the first request frame.

In a possible implementation, the first information includes a number, obtained before the first padding, of symbol blocks in the first request frame.

According to a twenty-fifth aspect, a communication apparatus is provided, including a processor. The processor is configured to enable, by executing a computer program or instructions or via a logic circuit, the communication apparatus to perform the method according to any one of the first aspect and the possible implementations of the first aspect, or the communication apparatus to perform the method according to any one of the second aspect and the possible implementations of the second aspect, or the communication apparatus to perform the method according to any one of the third aspect and the possible implementations of the third aspect, or the communication apparatus to perform the method according to any one of the fourth aspect and the possible implementations of the fourth aspect, or the communication apparatus to perform the method according to any one of the fifth aspect and the possible implementations of the fifth aspect, or the communication apparatus to perform the method according to any one of the sixth aspect and the possible implementations of the sixth aspect, or the communication apparatus to perform the method according to any one of the seventh aspect and the possible implementations of the seventh aspect, or the communication apparatus to perform the method according to any one of the eighth aspect and the possible implementations of the eighth aspect, or the communication apparatus to perform the method according to any one of the ninth aspect and the possible implementations of the ninth aspect, or the communication apparatus to perform the method according to any one of the tenth aspect and the possible implementations of the tenth aspect, or the communication apparatus to perform the method according to any one of the eleventh aspect and the possible implementations of the eleventh aspect, or the communication apparatus to perform the method according to any one of the twelfth aspect and the possible implementations of the twelfth aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a twenty-sixth aspect, a communication apparatus is provided, including a logic circuit and an input/output interface. The input/output interface is configured to input and/or output a signal, and the logic circuit is configured to perform the method according to any one of the first aspect and the possible implementations of the first aspect, or the logic circuit is configured to perform the method according to any one of the second aspect and the possible implementations of the second aspect, or the logic circuit is configured to perform the method according to any one of the third aspect and the possible implementations of the third aspect, or the logic circuit is configured to perform the method according to any one of the fourth aspect and the possible implementations of the fourth aspect, or the logic circuit is configured to perform the method according to any one of the fifth aspect and the possible implementations of the fifth aspect, or the logic circuit is configured to perform the method according to any one of the sixth aspect and the possible implementations of the sixth aspect, or the logic circuit is configured to perform the method according to any one of the seventh aspect and the possible implementations of the seventh aspect, or the logic circuit is configured to perform the method according to any one of the eighth aspect and the possible implementations of the eighth aspect, or the logic circuit is configured to perform the method according to any one of the ninth aspect and the possible implementations of the ninth aspect, or the logic circuit is configured to perform the method according to any one of the tenth aspect and the possible implementations of the tenth aspect, or the logic circuit is configured to perform the method according to any one of the eleventh aspect and the possible implementations of the eleventh aspect, or the logic circuit is configured to perform the method according to any one of the twelfth aspect and the possible implementations of the twelfth aspect.

According to a twenty-seventh aspect, a computer-readable storage medium is provided, including a computer program or instructions. When the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed, or the method according to any one of the sixth aspect and the possible implementations of the sixth aspect is performed, or the method according to any one of the seventh aspect and the possible implementations of the seventh aspect is performed, or the method according to any one of the eighth aspect and the possible implementations of the eighth aspect is performed, or the method according to any one of the ninth aspect and the possible implementations of the ninth aspect is performed, or the method according to any one of the tenth aspect and the possible implementations of the tenth aspect is performed, or the method according to any one of the eleventh aspect and the possible implementations of the eleventh aspect is performed, or the method according to any one of the twelfth aspect and the possible implementations of the twelfth aspect is performed.

According to a twenty-eighth aspect, a computer program product is provided, including instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed, or the method according to any one of the sixth aspect and the possible implementations of the sixth aspect is performed, or the method according to any one of the seventh aspect and the possible implementations of the seventh aspect is performed, or the method according to any one of the eighth aspect and the possible implementations of the eighth aspect is performed, or the method according to any one of the ninth aspect and the possible implementations of the ninth aspect is performed, or the method according to any one of the tenth aspect and the possible implementations of the tenth aspect is performed, or the method according to any one of the eleventh aspect and the possible implementations of the eleventh aspect is performed, or the method according to any one of the twelfth aspect and the possible implementations of the twelfth aspect is performed.

According to a twenty-ninth aspect, a computer program is provided. When the computer program is run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed, or the method according to any one of the sixth aspect and the possible implementations of the sixth aspect is performed, or the method according to any one of the seventh aspect and the possible implementations of the seventh aspect is performed, or the method according to any one of the eighth aspect and the possible implementations of the eighth aspect is performed, or the method according to any one of the ninth aspect and the possible implementations of the ninth aspect is performed, or the method according to any one of the tenth aspect and the possible implementations of the tenth aspect is performed, or the method according to any one of the eleventh aspect and the possible implementations of the eleventh aspect is performed, or the method according to any one of the twelfth aspect and the possible implementations of the twelfth aspect is performed.

For descriptions of beneficial effects of the second aspect to the twenty-ninth aspect, refer to the descriptions of the beneficial effects of the first aspect. Details are not described herein again.

### BRIEF DESCRIPTION OF DRAWINGS

FIG. 1 is a diagram of an application scenario 100 according to an embodiment of this application;
FIG. 2 is a diagram of handshakes 200 between an AP and a plurality of STAs;
FIG. 3 is a schematic interaction flowchart of a communication method 300 according to an embodiment of this application;
FIG. 4 is a diagram of handshakes 400 between an AP and a plurality of STAs;
FIG. 5 is a schematic interaction flowchart of a communication method 500 according to an embodiment of this application;
FIG. 6 is a diagram of handshakes 600 between an AP and a plurality of STAs;
FIG. 7 is a schematic interaction flowchart of a communication method 700 according to an embodiment of this application;
FIG. 8 is a diagram of handshakes 800 between an AP and a plurality of STAs;
FIG. 9 is a schematic interaction flowchart of a communication method 900 according to an embodiment of this application;
FIG. 10 is a diagram of a structure of a TDD beamforming information field according to an embodiment of this application;
FIG. 11(a) to FIG. 11(c) are a diagram of a structure of first information according to an embodiment of this application;
FIG. 12 is a diagram of handshakes 1200 between an AP and a plurality of STAs;
FIG. 13 is a schematic interaction flowchart of a communication method 1300 according to an embodiment of this application;
FIG. 14 is a diagram of a frame structure of a PPDU #A;
FIG. 15 is a block diagram of a communication apparatus 1500 according to an embodiment of this application;
FIG. 16 is a block diagram of a communication apparatus 1600 according to an embodiment of this application;
FIG. 17 is a block diagram of a communication apparatus 1700 according to an embodiment of this application;
FIG. 18 is a block diagram of a communication apparatus 1800 according to an embodiment of this application; and
FIG. 19 is a block diagram of a communication apparatus 1900 according to an embodiment of this application.

### DESCRIPTION OF EMBODIMENTS

The following describes the technical solutions of this application with reference to the accompanying drawings.

The technical solutions of this application are applicable to a wireless local area network (wireless local area network, WLAN) scenario, for example, are applicable to an IEEE 802.11 system standard, for example, the 802.11a/b/g standard, the 802.11n standard, the 802.11ac standard, the 802.11ax standard, the 802.11ad standard, the 802.11ay standard, the 802.11aj standard, or the 802.11bf standard, or a next-generation standard thereof, for example, the 802.11be standard, or a further next-generation standard.

Although this application is mainly described by using an example in which a WLAN network is deployed, and in particular, a network to which an IEEE 802.11 system standard is applied, a person skilled in the art easily understands that various aspects in embodiments of this application may be extended to other networks using various standards or protocols, for example, Bluetooth (Bluetooth), a high performance radio local area network (high performance radio local area network, HIPERLAN), a wide area network (wide area network, WAN), a personal area network (personal area network, PAN), or another network that is known or developed in the future. Therefore, regardless of used coverage and a used wireless access protocol, various aspects provided in this application are applicable to any appropriate wireless network.

The technical solutions of this application may be further applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a future 6th generation (6th generation, 6G) system, and a wireless local area network system such as an internet of things (internet of things, IoT) network or vehicle-to-everything (vehicle to x, V2X).

The communication systems applicable to this application are merely examples for description, and the communication systems applicable to this application are not limited thereto. This is described herein once for all, and details are not described below again.

A terminal in this application may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future 6G network, a terminal device in a public land mobile network (public land mobile network, PLMN), or the like. This is not limited in embodiments of this application.

A network device in this application may be a device configured to communicate with a terminal. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future 6G network, a network device in a PLMN network, or the like. This is not limited in embodiments of this application.

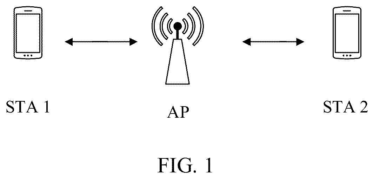

FIG. 1 is a diagram of an application scenario 100 according to an embodiment of this application. As shown in FIG. 1, an access point (access point, AP) may be a communication server, a router, or a switch, or may be any one of the foregoing network devices, and a station (station, STA) may be a mobile phone or a computer, or may be any one of the foregoing terminals. This is not limited in embodiments of this application.

It may be understood that the technical solutions of this application are not only applicable to communication between an AP and one or more STAs, but also applicable to communication between a STA and one or more APs, applicable to mutual communication between APs, and applicable to mutual communication between STAs. For ease of description, this application is described by using merely an example in which an AP communicates with one or more STAs. However, this description manner does not have any limitation on an actual application scope of the technical solutions of this application. This is described herein once for all, and details are not described below again.

The access point may be an access point used by a terminal (such as a mobile phone) to access a wired (or wireless) network, and is mainly deployed at home, in a building, or in a campus. A typical coverage radius is tens of meters or more than 100 meters. Certainly, the access point may alternatively be deployed outdoors. The access point is equivalent to a bridge that connects a wired network to a wireless network. The access point is mainly used to connect various wireless network clients together and then connect the wireless network to the Ethernet. Specifically, the access point may be a terminal device (for example, a mobile phone) or a network device (for example, a router) with a Wi-Fi chip. The access point may be a device supporting the 802.11be standard. Alternatively, the access point may be a device supporting a plurality of WLAN standards of the 802.11 family such as 802.11ax, 802.11ac, 802.11n, 802.11g, 802.11b, 802.11a, 802.11ad, 802.11ay, 802.11aj, 802.11bf, and a next generation of 802.11be. The access point in this application may be an HE AP or an EHT AP, or may be an access point applicable to a future-generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support WLAN standards of the 802.11 family such as 802.11ax, 802.11ac, 802.11n, 802.11g, 802.11b, 802.11a, 802.11ad, 802.11ay, 802.11aj, 802.11bf, and a next generation of 802.11be.

For example, the access point and the station each may be a device used in the internet of vehicles, an internet of things node, a sensor, or the like in the IoT, a smart camera, a smart remote control, or a smart water/electricity meter in a smart home, a sensor in a smart city, or the like.

It should be understood that the technical solutions of this application are not only applicable to communication between an AP and one or more STAs, but also applicable to communication between a STA and one or more APs, applicable to mutual communication between APs, and applicable to mutual communication between STAs. For ease of description, this application is described by using merely an example in which an AP communicates with one or more STAs. However, this description manner does not have any limitation on an actual application scope of the technical solutions of this application. This is described herein once for all, and details are not described below again.

A wireless communication system provided in this application may be a WLAN or a cellular network. A method may be implemented by a communication device in the wireless communication system or a chip or a processor in a communication device. The communication device may be a wireless communication device that supports parallel transmission on a plurality of links, for example, referred to as a multi-link device (multi-link device) or a multi-band device (multi-band device). Compared with a device that supports only single-link transmission, the multi-link device has higher transmission efficiency and a higher throughput. The multi-link device includes one or more affiliated stations STAs (affiliated STAs). The affiliated STA is a logical station and may work on one link. The affiliated station may be an AP or a non-AP STA. For ease of description, in this application, a multi-link device whose affiliated station is an AP may be referred to as a multi-link AP, a multi-link AP device, or an AP multi-link device (AP multi-link device), and a multi-link device whose affiliated station is a non-AP STA may be referred to as a multi-link STA, a multi-link STA device, or a STA multi-link device (STA multi-link device).

The following briefly describes terms related to the technical solutions of this application.

### First: Sensing technology

A signal sent by a Wi-Fi device is usually received by another device after being reflected, diffracted, and scattered by various obstacles. In this case, a signal actually received by the another device is usually obtained by superimposing a plurality of signals, that is, a channel environment may become complex. However, this facilitates sensing, by using a radio signal, a physical environment through which the radio signal passes. The radio signal affected by the various obstacles, for example, channel state information (channel state information, CSI) is analyzed, so that a surrounding environment can be inferred and sensed, and a sensing technology is derived accordingly.

The sensing technology includes four roles and five steps. The four roles are a sensing initiator (sensing initiator), a sensing responder (sensing responder), a sensing transmitter (sensing transmitter), and a sensing receiver (sensing receiver). The five steps are sensing session setup (sensing session setup), sensing measurement setup (sensing measurement setup), sensing measurement instance (sensing measurement instance), sensing measurement setup termination (sensing measurement setup termination), and sensing session termination (sensing session termination).

Specifically, the sensing initiator is a station/device that initiates a sensing process (also a station/device that initiates sensing measurement setup), the sensing responder is a station/device that participates in the sensing process initiated by the sensing initiator, the sensing transmitter is a station/device that sends, in the sensing process, a PPDU used for sensing measurement, and the sensing receiver is a station/device that receives, in the sensing process, the PPDU sent by the sensing transmitter and performs sensing measurement.

The sensing session setup indicates setup of a sensing session between stations. Some related capability parameters may be exchanged herein. The sensing measurement setup is used by the sensing initiator and the sensing responder to exchange and unify parameters, attributes, and the like that need to be used in the sensing process, for example, parameters such as the sensing initiator being the sensing transmitter and/or the sensing receiver, the sensing responder being the sensing transmitter and/or the sensing receiver, a type of sensing measurement feedback and a type of sensing information. The sensing measurement instance is used for sensing measurement and/or sensing reporting, and one sensing measurement instance allows a plurality of sensing responders to join. The sensing measurement setup termination indicates termination of established sensing measurement (corresponding to sensing measurement setup), and the sensing responder is not bound to the corresponding sensing measurement setup, but may still be in a sensing session. The sensing session termination indicates termination of a sensing session, and a station no longer participates in the sensing session.

It should be understood that a sensing session is a protocol between two stations/devices established between one device and another device. One device may establish sensing sessions with a plurality of devices.

### Second: Sensing measurement instance

Sensing measurement instances are classified into two types: a trigger-based sensing measurement instance (trigger-based sensing measurement instance) and a non trigger-based sensing measurement instance (non trigger-based sensing measurement instance). For example, in a trigger-based sensing process, an AP is a sensing initiator, and a STA is a sensing responder. In a non trigger-based sensing process, a STA may be a sensing initiator, and an AP may be a sensing responder. It should be noted that a type of a sensing measurement instance in the application scenario 100 is not specifically limited in this application. Alternatively, a difference between trigger-based sensing and non trigger-based sensing lies in that the trigger-based sensing uses a trigger frame in a sensing measurement instance, but the non trigger-based sensing does not need to use a trigger frame.

The sensing measurement instance includes the following phases: an inquiry/polling phase (polling phase) (which is an optional phase), a null data physical layer protocol data unit announcement sounding phase (null data physical layer protocol data unit announcement sounding phase), a trigger frame sounding phase (trigger frame sounding phase), and a reporting phase (reporting phase). Specifically, in the polling phase, whether a polled station can participate in measurement and feedback in a current sensing measurement instance may be determined. In the null data physical layer protocol data unit announcement sounding phase, a sensing initiator notifies, through an NDPA, a corresponding sensing responder that the sensing initiator is to subsequently send a null data physical layer protocol data unit (null data physical layer protocol data unit, NDP). In addition to notifying the sensing responder that needs to listen to the NDP, the NDPA further carries other configuration information. The corresponding sensing responder measures the NDP sent by the sensing initiator to obtain channel information. In the trigger frame sounding phase, a sensing initiator triggers, by using a trigger frame (trigger frame, TF), a sensing responder to transmit an NDP, and the sensing initiator measures the NDP sent by the sensing responder to obtain channel information.

It may be understood that communication between a STA 1 and the AP and communication between a STA 2 and the AP may be the foregoing sensing process. For example, a type of sensing between the STA 1 and the AP may be any one of the following: monostatic sensing (monostatic sensing), where a device (an AP or a STA) sends/receives a sensing PPDU to implement sensing; coordinated monostatic sensing (coordinated monostatic sensing), where a plurality of devices perform monostatic sensing in a coordinated manner, for example, an AP may serve as an initiator to invoke a plurality of STAs to perform monostatic sensing; bistatic sensing (bistatic sensing), where sending and receiving of a sensing PPDU are performed by different devices, for example, an AP sends a PPDU and a STA receives the PPDU, a STA sends a PPDU and an AP receives the PPDU, a STA sends a PPDU and a STA receives the PPDU, or an AP sends a PPDU and an AP receives the PPDU; coordinated bistatic sensing (coordinated bistatic sensing), where a plurality of devices perform bistatic sensing in a coordinated manner, for example, an AP invokes a plurality of STAs to perform bistatic sensing; and multistatic sensing (multistatic sensing), where for example, one device performs transmitting, and a plurality of devices perform receiving, to complete sensing.

For ease of description, in this application, an example in which the communication between the STA 1 and the AP and the communication between the STA 2 and the AP is the foregoing sensing process is used to describe the technical solutions in embodiments of this application.

The following describes a diagram of handshakes between an AP and a plurality of STAs with reference to the accompanying drawings.

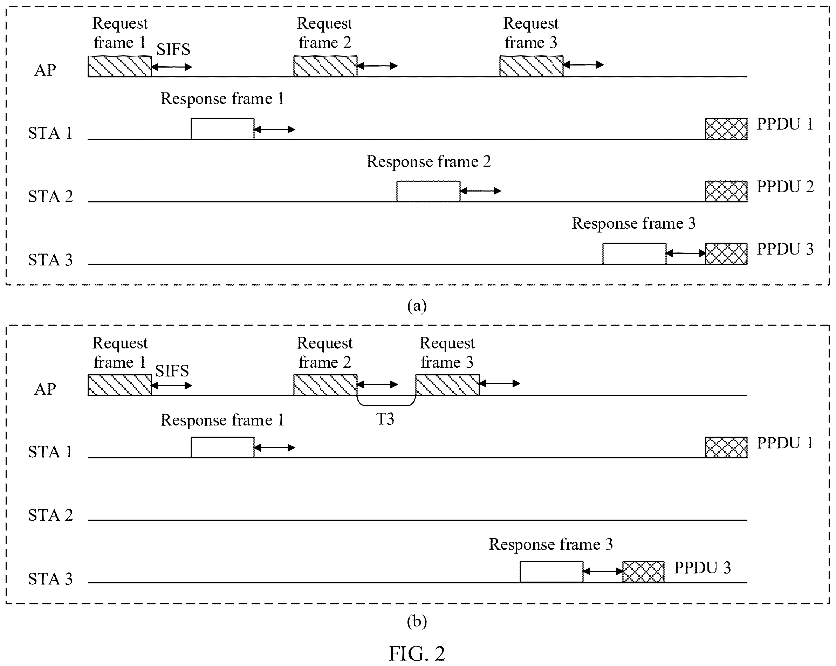

FIG. 2 is a diagram of handshakes 200 between an AP and a plurality of STAs. The AP completes a handshake with each STA. In this embodiment of this application, the handshake is an interaction process in which the AP sends a request frame to the STA, and then the STA sends a response frame to the AP. Specifically, the handshake between the AP and the STA includes a successful handshake and a failed handshake. The successful handshake means that the AP successfully sends the request frame to the STA, and the STA successfully replies to the AP with the response frame. The failed handshake includes a plurality of cases. For example, the AP fails to send the request frame to the STA, or the STA replies to the AP with the response frame, but the AP fails to receive the response frame, or the STA receives the request frame sent by the AP, but does not reply to the AP with the response frame. For ease of description, the following uses an example in which the AP separately performs handshakes with a STA 1 to a STA 3 for description, but a scenario in which the AP performs handshakes with more STAs is not limited.

As shown in (a) in FIG. 2, the AP sends a request frame 1 to the STA 1 (STA ID=1). After one short interframe space (short interframe space, SIFS), the STA 1 sends a response frame 1 to the AP. Then, the AP sends a request frame 2 to the STA 2 (STA ID=2). After one SIFS, the STA 2 sends a response frame 2 to the AP. The AP sends a request frame 3 to the STA 3 (STA ID=3). After one SIFS, the STA 3 sends a response frame 3 to the AP.

Each request frame includes an ID of a STA (indicating a ranking of one STA in a plurality of STAs participating in a sensing measurement instance) and a number of STAs participating in the sensing measurement instance (number of STAs in instance, NSTA). The STA can determine a sending time of a PPDU based on the information.

For example, the request frame 1 includes NSTA=3 and STA ID=1. The STA 1 determines that three STAs participate in this sensing measurement instance, and the STA 1 is the first STA. After sending the response frame 1, the STA 1 sends a PPDU 1 after (NSTA-STA ID=2)*(T1+T2)+(1+(NSTA-STA ID)*2) SIFSs elapse. The request frame 2 includes NSTA=3 and STA ID=2. The STA 2 determines that three STAs participate in the sensing measurement instance, and the STA 2 is the second STA. After sending the response frame 2, the STA 2 sends a PPDU 2 after (NSTA-STA ID=1)*(T1+T2)+(1+(NSTA-STA ID)*2) SIFSs elapse. The request frame 3 includes NSTA=3 and STA ID=3. The STA 3 determines that three STAs participate in the sensing measurement instance, and the STA 3 is the third STA. After sending the response frame 3, the STA 3 sends a PPDU 3 after (NSTA-STA ID=0)*(T1+T2)+(1+(NSTA-STA ID)*2) SIFSs elapse. One T1 indicates a time length of one request frame, and one T2 indicates a time length of one response frame. After separately completing the handshakes with the AP, the STA 1 to the STA 3 simultaneously send the PPDUs.

As shown in (b) in FIG. 2, the AP completes the handshakes with the STA 1 and the STA 3, but fails to complete the handshake with the STA 2. Specifically, after sending a request frame 2, the AP receives no response frame 2 in a time T3 and then sends a request frame 3 to the STA 3. Due to existence of the time T3, a sending time of the request frame 3 is advanced. As a result, a sending time of a PPDU 3 is inconsistent with a sending time of a PPDU 1, and sensing of the STA 1 and the STA 3 may fail.

In conclusion, if a part of STAs in the plurality of STAs fail to complete handshakes with the AP, simultaneous sending of PPDUs of the STAs that successfully complete the handshakes is affected.

In view of the foregoing technical problem, this application provides a communication method and a communication apparatus, to avoid impact, caused by a station that fails in a handshake, on simultaneous sending of PPDUs of stations that successfully complete handshakes.

The following describes the communication method in embodiments of this application with reference to the accompanying drawings.

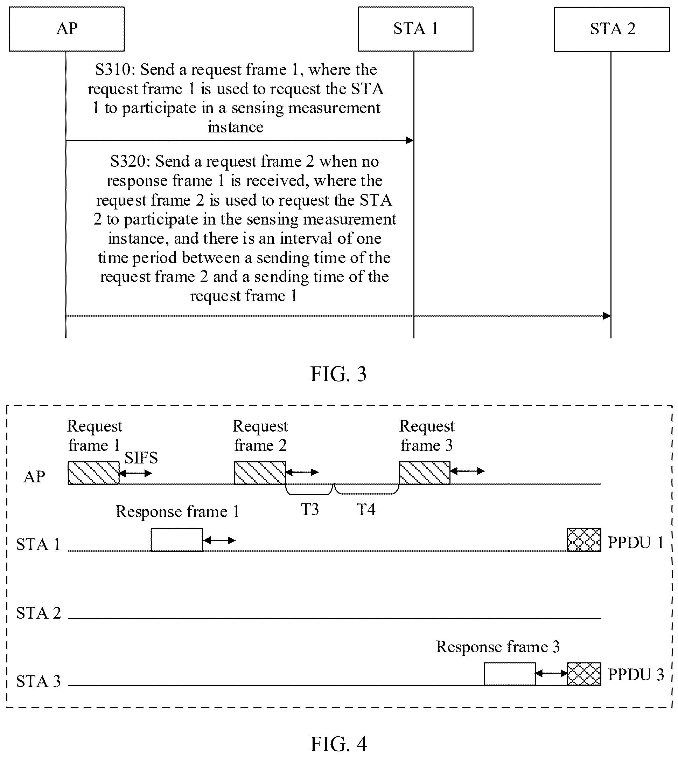

FIG. 3 is a schematic interaction flowchart of a communication method 300 according to an embodiment of this application. A procedure of the method in FIG. 3 may be performed by an AP and a STA, or may be performed by modules and/or components (for example, chips or integrated circuits) that are installed in the AP and the STA and that have corresponding functions. This is not limited in this application. The following uses the AP and the STA as an example for description. As shown in FIG. 3, the method 300 includes the following steps.

S310: An AP sends a request frame 1 to a STA 1, where the request frame 1 is used to request the STA 1 to participate in a sensing measurement instance.

Optionally, the request frame 1 may further include a parameter of the STA 1 in the sensing measurement instance.

S320: The AP sends a request frame 2 to a STA 2 when no response frame 1 is received, where the request frame 2 is used to request the STA 2 to participate in the sensing measurement instance.

Specifically, in S320, that "no response frame 1 is received" includes scenarios such as the STA 1 fails to receive the request frame 1, and therefore does not send the response frame 1 to the AP; or the STA 1 receives the request frame 1, but does not send the response frame 1 to the AP; or the STA 1 receives the request frame 1 and sends the response frame 1 to the AP, but the AP fails to receive the response frame 1 due to a factor like blocking.

It may be understood that the response frame 1 is a response to the request frame 1, and there is an interval of one time period P between a sending time of the request frame 2 and a sending time of the request frame 1, that is, the AP first sends the request frame 1 to the STA 1, and then sends the request frame 2 to the STA 2 after the time period P elapses. In this way, even if the AP fails to receive the response frame 1 from the STA 1, a sending time that is of a PPDU and that is determined by the STA 2 based on the request frame 2 may be aligned with a sending time that is of a PPDU and that is determined, based on a corresponding request frame, by another STA that succeeds in a handshake.

In a possible implementation, that there is the interval of one time period between the sending time of the request frame 2 and the sending time of the request frame 1 may include: A time length between an initial time (or a moment) of the sending time of the request frame 1 and an initial time (or a moment) of the sending time of the request frame 2 is equal to the time period P, or a time length between an end time (or a moment) of the sending time of the request frame 1 and an end time (or a moment) of the sending time of the request frame 2 is equal to the time period P; or a time length between an initial time (or a moment) of the sending time of the request frame 1 and an end time (or a moment) of the sending time of the request frame 2 is equal to the time period P, or a time length between an end time (or a moment) of the sending time of the request frame 1 and an initial time (or a moment) of the sending time of the request frame 2 is equal to the time period P. This is not limited in this application. The request frames have a same time length. For ease of description, the following uses an example in which the time period P is equal to a time interval between the end time (or the moment) of the sending time of the request frame 1 and the initial time (or the moment) of the sending time of the request frame 2 for description. However, another scenario is not limited.

In an example, before the AP sends the request frame 1 to the STA 1, the AP sends a request frame 3 to a STA 3, and receives a response frame 3 from the STA 3. Correspondingly, the STA 3 determines a sending time of a PPDU 3 based on the request frame 3. Although the AP fails to complete a handshake with the STA 1, the AP periodically (based on the time period P) sends request frames to STAs. Therefore, a sending time that is of a PPDU 2 and that is determined by the STA 2 based on the request frame 2 is consistent with the sending time that is of the PPDU 3 and that is determined by the STA 3 based on the request frame 3, and the STA 2 and the STA 3 may simultaneously send the PPDUs, so that the sensing measurement instance can be completed.

It may be understood that the STA 2 may complete a handshake with the AP, or may not complete a handshake with the AP. This is not limited.

Specifically, in the method 300, the request frame 1 and the request frame 2 are any two adjacent request frames, and are respectively used to request the corresponding STAs to participate in the sensing measurement instance. When the AP receives no response frame 1, the AP sends the request frame 2 to the STA 2 based on the time period P, that is, there is the interval of the time period P between the sending time of the request frame 2 and the sending time of the request frame 1. In other words, the AP waits to receive the response frame 1 within the time period P, and whether the AP successfully receives the response frame 1 within the time period P does not affect the sending time of the request frame 2. This can avoid impact of a failure to receive the response frame 1 on the sending time of the request frame 2, and can avoid adverse impact, caused by a station (for example, the STA 1) that fails in the handshake, on alignment of sending times of PPDUs of stations that succeed in handshakes, to complete sensing. In conclusion, the request frame is periodically sent, so that sending times that are of PPDUs and that are determined, based on respective request frames, by stations that succeed in handshakes are consistent, and are not affected by a station that fails in a handshake. This can avoid adverse impact, caused by the station that fails in the handshake, on alignment of the sending times of the PPDUs of the stations that succeed in the handshakes.

In a possible implementation, in S320, that "no response frame 1 is received" may further include: The AP receives no response frame 1 in a time T3. Specifically, after sending the request frame 1, the AP waits to receive, in the time T3, the response frame 1 sent by the STA 1. When the AP receives no response frame 1 in the time T3, the AP sends the request frame 2 to the STA2 after a time T4 elapses. A sum of the time T3 and the time T4 is equal to the time period P.

More specifically, when the AP receives no response frame 1 in the time T3 after completing sending of the request frame 1, the AP continues to wait for the time T4, and the sum of the time T3 and the time T4 is equal to the time period P. This can avoid adverse impact, caused by a station that fails in a handshake, on alignment of sending times of PPDUs of stations that succeed in handshakes.

It may be understood that the time T3 is a time length of one SIFS, or may be a time length (for example, a priority interframe space (priority interframe space, PIFS)) greater than a time length of one SIFS. This is not limited.

Optionally, a value of the time T3 may be equal to a value of the time period P, and correspondingly, a value of the time T4 is equal to 0. In this way, the AP may wait to receive the response frame 1 from the STA 1 within the time period P.

In a possible implementation, the value of the time period P is equal to a time length of T2+2*SIFS. It may be understood that if the time period P is equal to a time interval between the initial time (or the moment) of the sending time of the request frame 1 and the initial time (or the moment) of the sending time of the request frame 2, the time period P is equal to T2+2*SIFS+T1. Therefore, there is an association relationship between a specific time length of the time period P and definition of the time period P.

In a possible implementation, S320 may alternatively be: The AP sends the request frame 2 based on the time period P when the AP receives no response frame 1. For descriptions of the time period P, refer to the foregoing descriptions. Details are not described herein again.

In conclusion, the AP may periodically send the request frame 2 based on the time period P when the AP receives no response frame 1. For example, after sending the request frame 1 to the STA 1, the AP sends the request frame 2 to the STA 2 at an interval of one time period P. Correspondingly, after sending the request frame 2, the AP sends the request frame 3 to the STA 3 at an interval of one time period P. In this way, regardless of whether a STA replies with a response frame, it can be ensured that sending times of PPDUs of a plurality of STAs are subsequently aligned.

FIG. 4 is a diagram of handshakes 400 between an AP and a plurality of STAs. As shown in FIG. 4, the AP sends a request frame 1 to a STA 1, and the AP sends a request frame 2 to a STA 2 at an interval of one time period P. If the AP receives no response frame 1 from the STA 1 in a time T3, the AP continues to wait for a time T4, where P=T3+T4=2*SIFS+T2. Then, the AP sends a request frame 3 to a STA 3, and receives a response frame 3 from the STA 3 after one SIFS elapses. It can be learned from the foregoing descriptions that although the STA 1 fails to complete a handshake with the AP, alignment between a sending time of a PPDU 2 of the STA 2 and a sending time of a PPDU of the STA 3 is not affected.

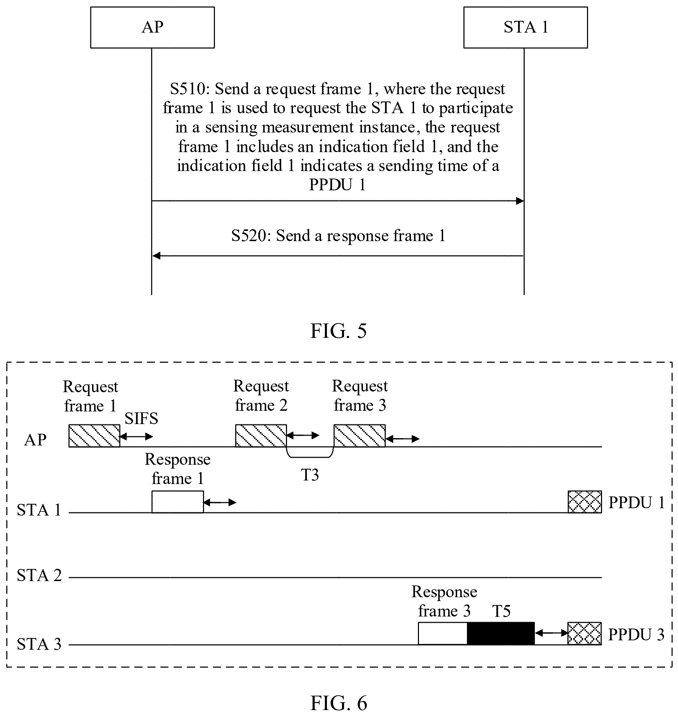

FIG. 5 is a schematic interaction flowchart of a communication method 500 according to an embodiment of this application. A procedure of the method in FIG. 5 may be performed by an AP and a STA, or may be performed by modules and/or components (for example, chips or integrated circuits) that are installed in the AP and the STA and that have corresponding functions. This is not limited in this application. The following uses the AP and the STA as an example for description. As shown in FIG. 5, the method 500 includes the following steps.

S510: An AP sends a request frame 1 to a STA 1, where the request frame 1 is used to request the STA 1 to participate in a sensing measurement instance, the request frame 1 includes an indication field 1, and the indication field 1 indicates a sending time at which the STA 1 sends a PPDU 1.

Correspondingly, the STA 1 receives the request frame 1 from the AP, and determines, based on the indication field 1 in the request frame 1, the sending time at which the STA 1 sends the PPDU 1.

Optionally, the request frame 1 may further include a parameter of the STA 1 in the sensing measurement instance.

Specifically, in S510, before the AP sends the request frame 1 to the STA 1, the AP sends a request frame 2 to a STA 2, where the request frame 2 is used to request the STA 2 to participate in the sensing measurement instance in which the STA 1 participates. However, after sending the request frame 2 to the STA 2, the AP receives no response frame 2 from the STA 2 in a time T3. Therefore, after the time T3, the AP sends the request frame 1 to the STA 1, to request the STA 1 to participate in the sensing measurement instance.

As shown in (b) in FIG. 2, if the STA 2 fails to complete the handshake with the AP, the sending time that is of the PPDU 1 and that is determined by the STA 1 based on the request frame 1 is inconsistent with the sending time that is of the PPDU 3 and that is determined by the STA 3 based on the request frame 3. This affects simultaneous sending of the PPDU of the STA 1 and the PPDU of the STA 3, and further affects completion of the sensing measurement instance.

Therefore, in this application, the indication field 1 can be added to the request frame 1, and the indication field 1 indicates the sending time of the PPDU 1. The STA 1 may determine the sending time of the PPDU 1 based on the indication field 1, and the sending time of the PPDU 1 is aligned with the sending time that is of the PPDU 3 and that is determined by the STA 3 (a STA that succeeds in a handshake) based on the request frame 3. This can avoid a case in which the sending time of the PPDU 1 is advanced because a sending time of the request frame 3 is advanced due to a handshake failure of the STA 2.

S520: The STA 1 sends a response frame 1 to the AP.

Correspondingly, the AP receives the response frame 1 from the STA 1.

Specifically, for STAs, sending times that are of PPDUs and that are indicated by indication fields of request frames are different from each other. For example, for the STA 1, the sending time that is of the PPDU 1 and that is indicated by the indication field 1 in the request frame 1 is t1, and for the STA 3, the sending time that is of the PPDU 3 and that is indicated by an indication field 3 in the request frame 3 is t3. However, the STA 1 and the STA 3 may simultaneously send the PPDUs (or simultaneously start sending the PPDUs) at a same time, to complete sensing. This can avoid adverse impact, caused by a station that fails in a handshake, on alignment of sending times of PPDUs of stations that succeed in handshakes.

In a possible implementation, the sending times that are of the PPDUs and that are indicated by the indication fields of the request frames may be absolute times or relative times. For example, if the times are the absolute times, the times that are of the PPDUs and that are indicated by the indication fields of the request frames are the same. If the times are the relative times, the sending times that are of the PPDUs and that are indicated by the indication fields of the request frames are different. This is not limited.

In a possible implementation, the indication field 1 includes information about the sending time of the PPDU 1. For example, the AP specifically indicates the sending time of the PPDU 1. Correspondingly, the STA 1 directly determines the sending time of the PPDU 1 based on the information.

Optionally, the sending time that is of the PPDU 1 and that is indicated by the indication field 1 is a waiting time elapsing after the STA 1 completes sending of the response frame 1. A time before the STA 1 sends the PPDU 1 includes a time for the STA 1 to send the response frame 1 and the waiting time. Therefore, the information about the sending time of the PPDU 1 may include a specific sending time of the PPDU 1, or may include the waiting time elapsing after the STA 1 completes sending of the response frame 1. This is not limited. The STA 1 may determine the sending time of the PPDU 1 based on the foregoing two scenarios.

In a possible implementation, the indication field 1 includes a number of STAs from which the AP receives no response frame before the request frame 1 is sent. For example, before the AP sends the request frame 1 to the STA 1, the AP sends the request frame 2 to the STA 2 and receives no response frame 2 from the STA 2. Therefore, the indication field 1 in the request frame 1 sent by the AP to the STA 1 indicates one STA. Correspondingly, the STA 1 determines, based on a value indicated in the indication field 1 (for example, the indication field 1 is an N_{fail} field), that one STA fails to complete a handshake with the AP. Therefore, the sending time of the PPDU 1 needs to be determined through calculation based on the indication field 1. For example, the sending time of the PPDU 1=(NSTA-STA ID)*(2*SIFS+T1+T2)+N*(T2+2*SIFS-T3).

It may be understood that T3 may alternatively be an interval between sending times of two adjacent request frames (for example, the request frame 1 and the request frame 2). For example, the time interval between the sending time of the request frame 1 and the sending time of the request frame 2 is T3. If the AP receives the response frame 2 from the STA 2, the time T3 is equal to the time period shown in (a) in FIG. 2. If the AP receives no response frame 2 from the STA 2, the time T3 is equal to the time period shown in (b) in FIG. 2. In addition, in this embodiment of this application, the adjacent request frames mean that the AP first sends a request frame and then sends another request frame, and the two request frames are adjacent request frames.

Specifically, NSTA indicates a number of STAs participating in the sensing measurement instance, STA ID indicates a ranking of the STA 1, and N indicates a number of STAs that fail to complete handshakes. In this way, although the AP sends the request frame 1 to the STA 1 only when the AP receives no response frame 2 within the time T3 after sending the request frame 2, the STA 1 may infer the sending time of the PPDU 1 based on the indication field 1, to ensure that the sending time of the PPDU 1 is aligned with the sending time of the PPDU 3.

In general, after receiving the request frame from the AP, the STA obtains NSTA, STA ID, and an N_{fail} parameter (indicated by N). After sending a response frame, each STA sends a PPDU after (N*(T2+2*SIFS-T3)) additionally elapses in addition to (NSTA-STA ID)*(2*SIFS+T1+T2). If each STA needs to pad the response frame, a time length corresponding to padding is (N*(T2+2*SIFS-T3)).

In a possible implementation, that the STA 1 determines the sending time of the PPDU 1 based on the indication field 1 may alternatively be that the STA 1 determines, based on the indication field 1, a time that needs to additionally elapse for sending the PPDU 1. For example, the STA 3 completes the handshake with the AP, and the STA 2 fails to complete the handshake with the AP. When the AP performs a handshake with the STA 1, the indication field 1 in the request frame 1 sent by the AP to the STA 1 indicates that one device (namely, the STA 2) fails to complete the handshake. After learning of the information, after sending the response frame 1, the STA 1 sends the PPDU 1 after a time T5 additionally elapses in addition to one SIFS (that is, (T2+2*SIFS-T3) additionally elapses in addition to one SIFS that originally needs to elapse). In this way, the STA 1 and the STA 3 may simultaneously send the PPDUs, to complete the sensing measurement instance.

FIG. 6 is a diagram of handshakes 600 between an AP and a plurality of STAs. As shown in FIG. 6, the AP sends a request frame 1 to a STA 1, and receives a response frame 1 from the STA 1 after one SIFS. After one SIFS, the AP further sends a request frame 2 to a STA 2, and the AP further sends a request frame 3 to a STA 3 when the AP receives no response frame 2 from the STA 2 in a time T3. The request frame 3 includes an indication field 3, and the indication field 3 indicates that one STA fails to complete a handshake. Before sending a PPDU 3, the STA 3 determines, based on the indication field 3, the time T5 that needs to additionally elapse (or a sending time of the PPDU 3=T5+SIFS). In this way, although the STA 2 fails to complete the handshake with the AP, alignment between the sending time of the PPDU of the STA 3 and a sending time of a PPDU of another STA that succeeds in a handshake is not affected.

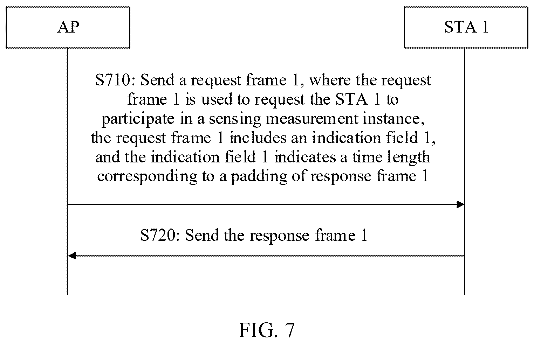

FIG. 7 is a schematic interaction flowchart of a communication method 700 according to an embodiment of this application. A procedure of the method in FIG. 7 may be performed by an AP and a STA, or may be performed by modules and/or components (for example, chips or integrated circuits) that are installed in the AP and the STA and that have corresponding functions. This is not limited in this application. The following uses the AP and the STA as an example for description. As shown in FIG. 7, the method 700 includes the following steps.

S710: An AP sends a request frame 1 to a STA 1, where the request frame 1 is used to request the STA 1 to participate in a sensing measurement instance, the request frame 1 includes an indication field 1, and the indication field 1 indicates a time length corresponding to padding of a response frame 1.

Correspondingly, the STA 1 receives the request frame 1 from the AP, and may determine, based on the indication field 1 in the request frame 1, the time length corresponding to the padding of the response frame 1.

Optionally, the request frame 1 may further include a parameter of the STA 1 in the sensing measurement instance.

S720: The STA 1 sends the response frame 1 to the AP.

Correspondingly, the AP receives the response frame 1 from the STA 1.

Specifically, in S710, before the AP sends the request frame 1 to the STA 1, the AP sends a request frame 2 to a STA 2, where the request frame 2 is used to request the STA 2 to participate in the sensing measurement instance in which the STA 1 participates. However, after sending the request frame 2 to the STA 2, the AP receives no response frame 2 from the STA 2 in a time T3. Therefore, after the time T3, the AP sends the request frame 1 to the STA 1, to request the STA 1 to participate in the sensing measurement instance.

As shown in (b) in FIG. 2, if the STA 2 fails to complete the handshake with the AP, the sending time that is of the PPDU 1 and that is determined by the STA 1 based on the request frame 1 is inconsistent with the sending time that is of the PPDU 3 and that is determined by the STA 3 based on the request frame 3. This affects simultaneous sending of the PPDU of the STA 1 and the PPDU of the ST 3, and further affects completion of the sensing measurement instance.

Therefore, in this application, the indication field 1 can be added to the request frame 1, to indicate the time length corresponding to the padding of the response frame 1. Correspondingly, the STA 1 determines, based on the indication field 1, the time length corresponding to the padding of the response frame 1. In this way, after padding (padding) is performed on the response frame 1, a time at which the STA 1 sends the PPDU 1 is aligned with a time at which the STA 3 (a STA that succeeds in a handshake) sends the PPDU 3. This can avoid a case in which the sending time of the PPDU 1 is advanced because a sending time of the request frame 3 is advanced due to a handshake failure of the STA 2.

In a possible implementation, the indication field 1 may include a number of STAs from which the AP receives no response frame before the request frame 1 is sent. For example, before the AP sends the request frame 1 to the STA 1, the AP sends the request frame 2 to the STA 2 and receives no response frame 2 from the STA 2. Therefore, the indication field 1 in the request frame 1 sent by the AP to the STA 1 indicates one STA. Correspondingly, the STA 1 determines, based on a value indicated in the indication field 1 (for example, the indication field 1 is an N_{fail} field), that one STA fails to complete a handshake with the AP. Therefore, the response frame 1 needs to be padded. In addition, the time length corresponding to the padding of the response frame 1 needs to be determined through calculation based on the indication field 1. For example, the time length corresponding to the padding of the response frame 1=N*(T2+2*SIFS-T3). For example, when the AP receives no response frame 2 from the STA 2, the AP may indicate, in the request frame 1 sent to the STA 1, the STA 1 to pad the response frame. A time length corresponding to the padding is described above.

Specifically, NSTA indicates a number of STAs participating in the sensing measurement instance, STA ID indicates a ranking of the STA 1, and N indicates a number of STAs that fail to complete handshakes. In this way, although the AP sends the request frame 1 to the STA 1 after the time T3 after sending the request frame 2, the STA 1 may pad the response frame 1 based on the indication field 1. This can also ensure that the sending time of the PPDU 1 is aligned with the sending time of the PPDU 3.

In a possible implementation, the AP indicates the STA 1 to pad or wait. For example, the AP sends indication information 1 to the STA 1, where the indication information 1 indicates to pad the response frame 1, and a time length corresponding to the padding of the response frame 1 is described above. For another example, the AP sends indication information 1 to the STA 1, where the indication information 1 indicates to send the PPDU 1 after a time T5 additionally elapses in addition to one SIFS after the response frame 1 is sent. The indication information 1 may exist independently of the request frame 1, or the indication information 1 belongs to the request frame 1. This is not limited.

In a possible implementation, after receiving the request frame 1, the STA 1 pads the response frame 1 in a pre-configuration manner, or waits, in a pre-configuration manner, for an additional time T5 after sending the response frame 1. This is not limited.

Generally, the STA may pad the response frame, and the time length corresponding to the padding of the response frame=N*(T2+2*SIFS-T3). In this way, sending times of PPDUs of STAs can be aligned.

In a possible implementation, before sending the request frame 1 to the STA 1, when the AP determines that no response frame 2 from the STA 2 is received, the AP pads the request frame 1, where a time length corresponding to the padding of the request frame 1 is equal to N*(T2+2*SIFS-T3). In this way, sending times of PPDUs of STAs can also be aligned. Correspondingly, the request frame 1 may not carry the indication field 1.

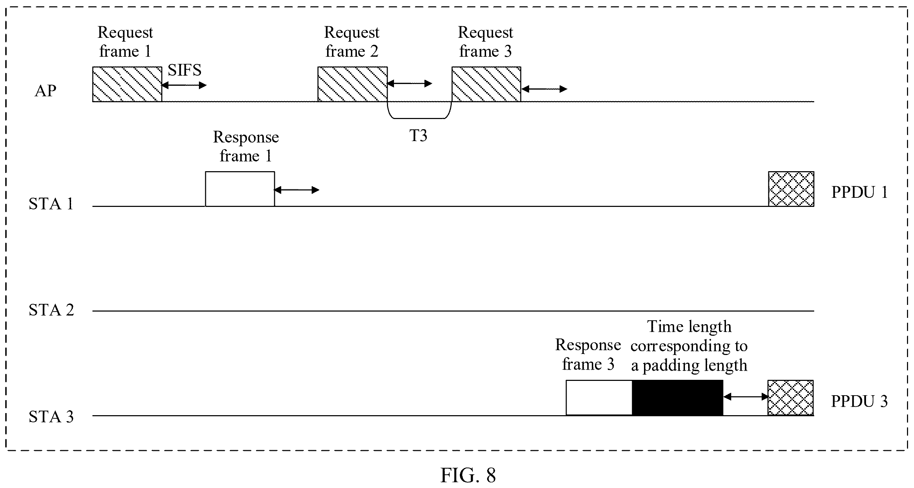

FIG. 8 is a diagram of handshakes 800 between an AP and a plurality of STAs. As shown in FIG. 8, the AP sends a request frame 1 to a STA 1, and receives a response frame 1 from the STA 1 after one SIFS. After one SIFS, the AP sends a request frame 2 to a STA 2, and the AP sends a request frame 3 to a STA 3 when the AP receives no response frame 2 from the STA 2 in a time T3. The request frame 3 includes an indication field 3, and the indication field 3 indicates that one STA fails to complete a handshake. The STA 3 determines, based on the indication field 3, a time length corresponding to padding of the response frame 3, and sends a PPDU 3 after one SIFS. In this way, although the STA 2 fails to complete the handshake with the AP, alignment between a sending time of the PPDU of the STA 3 and a sending time of a PPDU of another STA that succeeds in a handshake is not affected.

It may be understood that a manner in which the STA 3 pads the response frame 3 shown in FIG. 8 may also be applied to a case in which the AP pads the request frame 3. For a specific process, refer to the foregoing descriptions. Details are not described herein again.

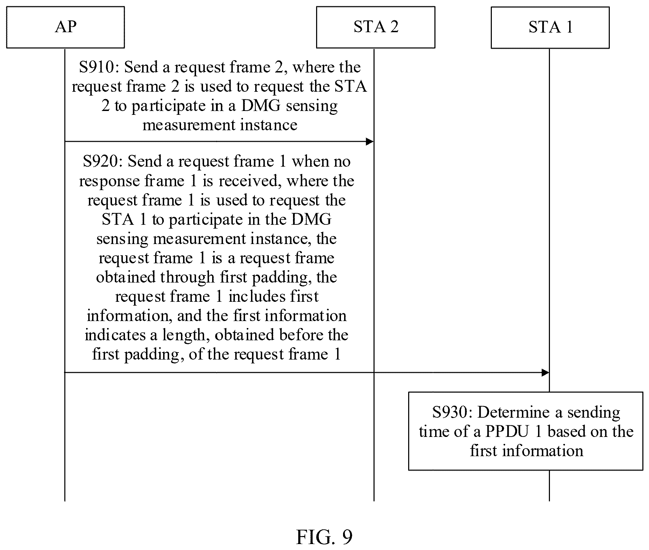

After the request frame 1 is padded, a length of the request frame 1 is different from a length of an unpadded request frame, and a sending time that is of a PPDU and that is determined by the STA based on the request frame 1 is different from a sending time that is of a PPDU and that is determined by the STA based on the unpadded request frame. For example, a waiting sending time of the PPDU=(NSTA-STA ID)*(T1+T2)+(1+(NSTA-STA ID)*2)*SIFS, where T1 is the length of the request frame. Because the request frame 1 is padded, the sending time that is of the PPDU, that corresponds to the request frame 1, and that is determined based on the foregoing formula is different from the sending time that is of the PPDU and that corresponds to the request frame 2 (the unpadded request frame). Consequently, the sending times of the PPDUs may not be aligned. To resolve the foregoing problem, according to this application, the information about the length, obtained before padding, of the request frame 1 can be exchanged by using the method shown in FIG. 9. In this way, the sending times of the PPDUs can be aligned.

It should be noted that the waiting sending time of the PPDU may be a period of time elapsing after the STA sends the response frame and before the STA sends the PPDU. Sending waiting times of PPDUs corresponding to different STAs are different. If the length of the request frame changes, sending waiting times of PPDUs of some STAs change. Consequently, sending times of the PPDUs cannot be aligned.

FIG. 9 is a schematic interaction flowchart of a communication method 900 according to an embodiment of this application. A procedure of the method in FIG. 9 may be performed by an AP and a STA, or may be performed by modules and/or components (for example, chips or integrated circuits) that are installed in the AP and the STA and that have corresponding functions. This is not limited in this application. The following uses the AP and the STA as an example for description. As shown in FIG. 9, the method 900 includes the following steps.

S910: An AP sends a request frame 2 (for example, a first request frame) to a STA 2, where the request frame 2 is used to request the STA 2 (for example, a first station) to participate in a directional multi-gigabit (directional multi-gigabit, DMG) sensing measurement instance (or a directional multi-gigabit sensing measurement exchange (DMG sensing measurement exchange)).

S920: When the AP receives no response frame 2 (for example, first response frame), the AP sends a request frame 1 (for example, a second request frame) to a STA 1 (for example, a second station), where the request frame 1 is used to request the STA 1 to participate in the directional multi-gigabit sensing measurement instance (or the directional multi-gigabit sensing measurement exchange (DMG sensing measurement exchange)).

The AP may be a sensing initiator or a personal basic service set control point (personal basic service set control point, PCP), and the STA 1 and the STA 2 may be sensing responders. For ease of description, the following uses the AP, the STA 1, and the STA2 as examples for description.

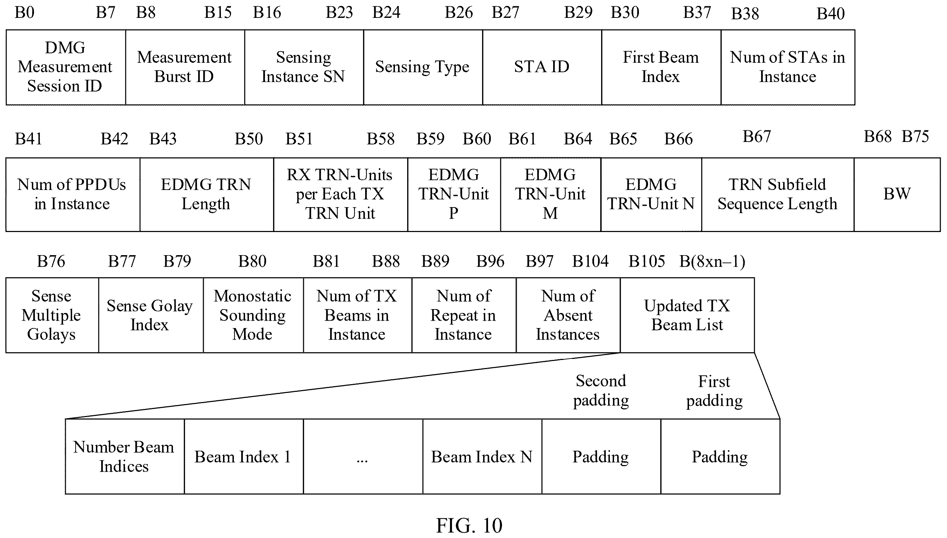

When the AP fails in a handshake with the STA 2 (the STA 2 is a STA before the STA 1), if the AP sends the request frame 1 to the STA 1 in an existing manner, a sending time of a PPDU sent by the STA 1 and a sending time of a PPDU sent by another STA that succeeds in a handshake cannot be aligned. Therefore, the AP may perform first padding on the request frame 1. After the first padding is performed on the request frame 1, a length of the request frame 1 changes. Therefore, the AP needs to include first information in the request frame 1, and the first information indicates a length, obtained before the first padding, of the request frame 1. Because the AP supports the first padding on the request frame 1, for a structure of a TDD beamforming information field in the request frame 1, refer to FIG. 10.

FIG. 10 is a diagram of a structure of the TDD beamforming information field according to an embodiment of this application. As shown in FIG. 10, the TDD beamforming information field includes a DMG measurement session identifier (DMG measurement session ID), a measurement burst ID (measurement burst ID), a sensing instance sequence number (sensing instance sequence number), a sensing type (sensing type), a station ID (STA ID), a first beam index (first beam index), a number of stations in an instance (Num of STA in instance), a number of PPDUs in an instance (Num of PPDUs in instance), an enhanced directional multi-gigabit training length (EDMG TRN length), a receive training unit in each transmit training unit (RX TRN-UNITs per each TX TRN Unit), an enhanced directional multi-gigabit training unit P (EDMG TRN-Unit P), an enhanced directional multi-gigabit training unit M (EDMG TRN-Unit M), an enhanced directional multi-gigabit training unit N (EDMG TRN-Unit N), a training subfield sequence length (TRN subfield sequence length), a bandwidth (bandwidth, BW), a sense multiple golays (sense multiple golays), a monostatic sounding mode (monostatic sounding mode), a number of transmit beams in an instance (Num of TX beams in instance), a number of repeats in an instance (Num of Repeat in instance), a number of absent instances (Num of absent instances), and an updated transmit beam list (Updated TX beam list). The updated transmit beam list (Updated TX beam list) includes a number of beam indices (Number of beam indices), a beam index 1 (beam index 1), ..., a beam index N (beam index N), a second padding (padding), and a first padding.

It should be noted that the AP performs second padding on each request frame, that is, request frames obtained through the second padding (without the first padding) have a same length. Because the AP performs the first padding on the request frame 2, a length of the request frame 1 obtained through the first padding is different from a length of a request frame obtained through only the second padding. Therefore, the request frame 1 needs to include the first information indicating the length, obtained before the first padding, of the request frame 1. Each of the foregoing request frames is a radio frame in a DMG sensing measurement interaction process. To be specific, both the request frame 1 and the request frame 2 are DMG sensing request frames (DMG Sensing Request frames).

It should be further noted that the second padding is for the TDD beamforming information field. The first padding is for the entire DMG sensing request frame, and may occur at any position in the DMG sensing request frame, not limited to the TDD beamforming information field. Therefore, that the first padding is located in the TDD beamforming information field is merely used as an example for understanding, and is not used as a final limitation.

In a possible embodiment, the first information includes the information about the length, obtained before the first padding, of the request frame 1. Specifically, the first information may include a length, obtained through the second padding, of the updated TX beam list. In other words, the first information may indicate a length, obtained through the second padding (without the first padding), of the TDD beamforming information field. After receiving the request frame 1, the STA 1 determines, based on the first information, the length, obtained through the second padding, of the TDD beamforming information field in the request frame 1. Further, the STA 1 may learn, based on the first information, an actual time that needs to elapse, to ensure subsequent alignment of sending times of PPDUs.

In a possible embodiment, the first information indicates whether the request frame 1 is a request frame on which the first padding is performed. Specifically, when the request frame 1 is the request frame on which the first padding is performed, because a length of the first padding is fixed, when the STA 1 determines, based on the first information, that the request frame 1 is the request frame on which the first padding is performed, the STA 1 may subtract the length (or the time length) of the first padding from the length of the request frame 1, to obtain the length, obtained through only the second padding, of the request frame 1. The length (or the time length) of the first padding is T2+2*SIFS-T3. For example, T3 may be equal to SIFS+aCCATIME.

In a possible embodiment, the first information includes a length (or a time length) corresponding to the first padding. Specifically, the first information includes the length (or the time length) corresponding to the first padding. The STA 1 may determine, based on the length of the received request frame 1 (or the DMG sensing request frame including the first padding) and the length (or the time length) corresponding to the first padding, a length, obtained through the second padding without the first padding, of the request frame 1 (or the DMG sensing request frame). Further, the STA 1 may learn, based on the first information, an actual time that needs to elapse, to ensure subsequent alignment of sending times of PPDUs.

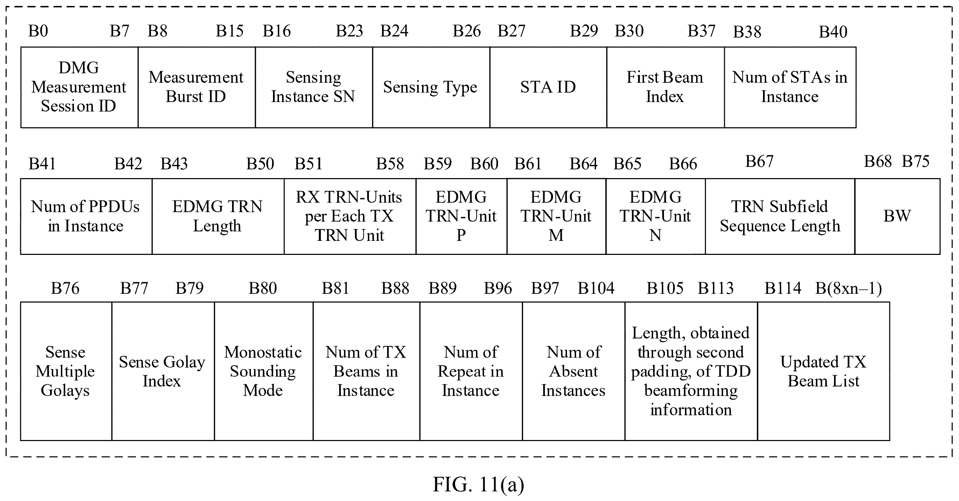

Specifically, after receiving the request frame 1, the STA 1 can determine the length (or the time length) of the first padding based on the first information, and then determine, based on an overall length of the request frame 1 (which may be learned based on a PSDU length field in a PHY header), the length (or the time length), obtained through the second padding without the first padding, of the request frame 1. When the AP does not perform first padding on the request frame 1, the first information may be reserved or retained (for example, set to 0). For descriptions of the first information, refer to FIG. 11(a) to FIG. 11(c).

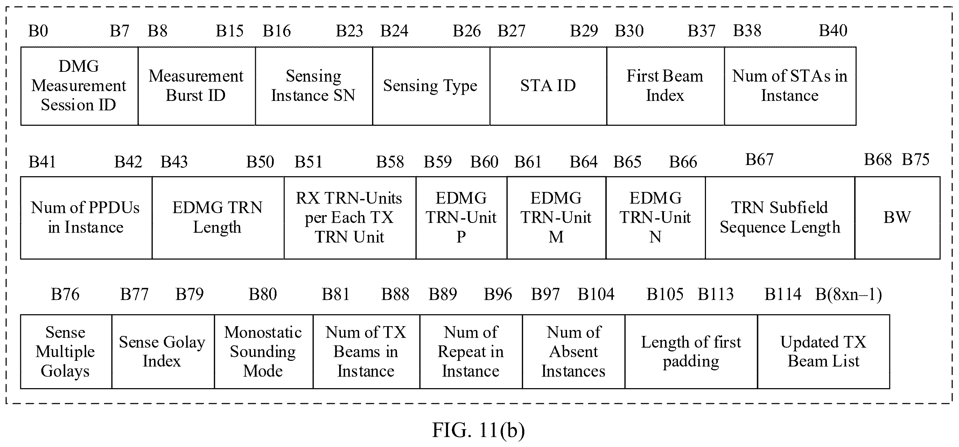

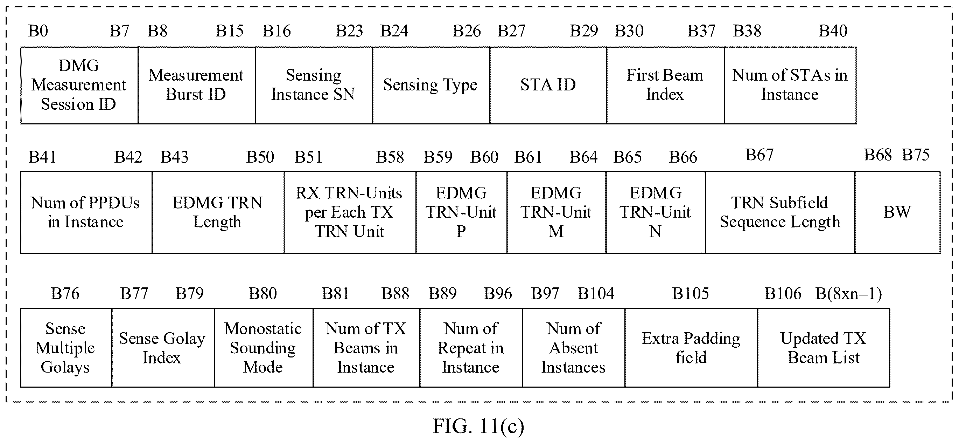

FIG. 11(a) to FIG. 11(c) are a diagram of the first information according to an embodiment of this application. As shown in FIG. 11(a), when the first information includes the information about the length, obtained before the first padding, of the request frame 1, the first information may be the length, obtained through the second padding, of the TDD beamforming information field. In this way, the STA 1 may determine, based on the first information, the information about the length, obtained before the first padding, of the request frame 1. As shown in FIG. 11(b), when the first information includes the length of the first padding, the first information may be the length of the first padding. As shown in FIG. 11(c), when the first information indicates whether the request frame 1 is the request frame on which the first padding is performed, the first information may be an extra padding (extra padding) field (a name of the extra padding field is merely an example for understanding, and is not limited to a specific name), and indicate whether the request frame 1 is the request frame on which the first padding is performed. For example, when a value of the extra padding field is 1, it indicates that the request frame 1 is the request frame on which the first padding is performed, and the length of the first padding is T2+2*SIFS-T3. When a value of the extra padding field is 0, it indicates that the request frame 1 is a request frame on which no first padding is performed.

It should be noted that, when the STA 1 determines, based on the first information, the information about the length, obtained before the first padding, of the request frame 1, the sending waiting time of the PPDU=(NSTA-STA ID)*(T1+T2)+(1+(NSTA-STA ID)*2)*SIFS, where T1 is the length, obtained before the first padding, of the request frame 1. In this way, this application implements alignment of sending times of PPDUs.

In a possible embodiment, the first information includes an air interface length, obtained before the first padding, of the request frame 1. Specifically, the STA 1 may determine, based on the air interface length that is of the request frame 1 and obtained before the first padding and that is included in the first information, an actual time that needs to elapse, to ensure subsequent alignment of sending times of PPDUs.

In a possible embodiment, the first information includes a number, obtained before the first padding, of symbol blocks (for example, single carrier symbol blocks (SC Symbol Blocks)) in the request frame 1. Specifically, when the first information includes the number, obtained before the first padding, of the symbol blocks in the request frame 1, the STA 1 may determine, based on a length corresponding to one symbol block and the number of symbol blocks, the length, obtained before the first padding, of the request frame 1. More specifically, the STA 1 may determine, based on the length corresponding to one symbol block and the number of symbol blocks, an air interface time length, obtained before the first padding, of the request frame 1, to ensure subsequent alignment of sending times of PPDUs.

S930: The STA determines a sending time of a PPDU 1 based on the first information.

Specifically, the first information indicates the information about the length, obtained before the first padding, of the request frame 1. Therefore, the STA 1 may determine the sending time of the PPDU 1 based on the foregoing formula: (NSTA-STA ID)*(T1+T2)+(1+(NSTA-STA ID)*2)*SIFS. The sending time of the PPDU 1 may be aligned with a sending time of a PPDU 2. The PPDU 2 is a PPDU sent by a STA 3, and the STA 3 is a STA that succeeds in a handshake.

A length, obtained before the first padding, of the second request frame is indicated, so that a receive end can determine an accurate PPDU sending time based on the length, obtained before the first padding, of the second request frame, and can further keep a PPDU sending time aligned with that of another station that succeeds in a handshake.

According to the foregoing solution, this application prevents a station (for example, the first station) that fails in a handshake from affecting simultaneous sending of PPDUs of stations that succeed in handshakes, to complete sensing.

It should be noted that the STA 1 may further send a response frame to the AP, and the response frame is used to respond to the request frame 1. When the AP successfully receives the response frame, it indicates that the AP and the STA 1 successfully complete a handshake.

In the foregoing solution, according to this application, padding formats of the first padding and the second padding can be changed, so that the STA 1 can distinguish between the first padding and the second padding and can further determine the length, obtained before the first padding, of the request frame 1. For example, the second padding uses an all-0 padding format, and the first padding uses an all-1 padding format; or the second padding uses an all-1 padding format, and the first padding uses an all-0 padding format; or the second padding uses a special padding format, and the first padding uses a padding manner that can be distinguished from that of the second padding. Therefore, after receiving the request frame 1, the STA 1 can distinguish between the two paddings, to learn of the length of the request frame 1 that does not include the first padding.

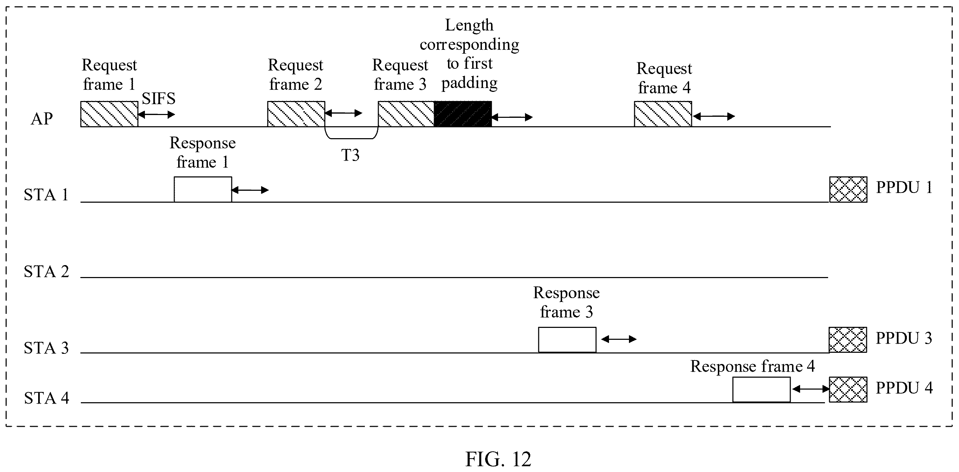

The following further describes the method shown in FIG. 9 with reference to FIG. 12. There is no association between terms described in FIG. 12 and the terms described in FIG. 9, that is, for example, a STA 2 in FIG. 12 is not the STA 2 in FIG. 9, and a PPDU 1 in FIG. 12 is not the PPDU 1 in FIG. 9. This is uniformly described herein, and details are not described below again.

FIG. 12 is a diagram of handshakes 1200 between an AP and a plurality of STAs. As shown in FIG. 12, the AP sends a request frame 1 to a STA 1, and receives a response frame 1 from the STA 1 after one SIFS. After one SIFS, the AP sends a request frame 2 to a STA 2. The AP sends a request frame 3 to a STA 3 when the AP receives no response frame 2 from the STA 2 in a time T3, where the request frame 3 includes first information, and the first information indicates a length, obtained before the first padding, of the request frame 3; and the AP receives a response frame 3 from the STA 3 after one SIFS. After one SIFS, the AP sends a request frame 4 to a STA 4, and receives a response frame 4 from the STA 4 after one SIFS.

Further, the STA 1 determines, according to the formula: (NSTA-STA ID)*(T1+T2)+(1+(NSTA-STA ID)*2)*SIFS, that a sending waiting time of a PPDU 1 (after the response frame is sent) is 3*(T1+T2)+7*SIFS. The STA 3 determines, according to the formula: (NSTA-STA ID)*(T1+T2)+(1+(NSTA-STA ID)*2)*SIFS, that a sending waiting time of a PPDU 3 is (T1+T2)+3*SIFS. The STA 4 determines, according to the formula: (NSTA-STA ID)*(T1+T2)+(1+(NSTA-STA ID)*2)*SIFS, that a sending waiting time of a PPDU 4 is 1*SIFS. The sending waiting time that is of the PPDU 3 and that is determined by the STA 3 is determined based on the first information in the request frame 3. In this way, sending times of PPDUs respectively corresponding to the STA 1, the STA3, and the STA 4 may be aligned. For descriptions of the sending waiting time of the PPDU, refer to the foregoing descriptions.

The first information is added to the request frame 3, and the sending time of the PPDU 3 determined by the STA 3 based on the first information is aligned with the sending time of the PPDU 1 and the sending time of the PPDU 4, so that impact, caused by a station that fails in a handshake, on alignment of sending times of PPDUs of stations that succeed in handshakes can be avoided.

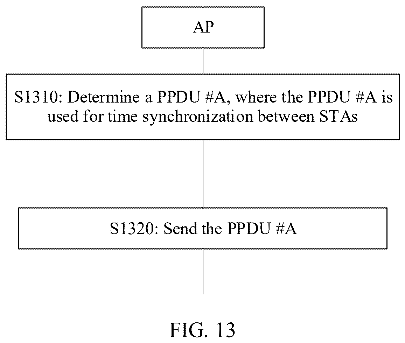

FIG. 13 is a schematic interaction flowchart of a communication method 1300 according to an embodiment of this application. A procedure of the method in FIG. 13 may be performed by an AP and a STA, or may be performed by modules and/or components (for example, chips or integrated circuits) that are installed in the AP and the STA and that have corresponding functions. This is not limited in this application. The following uses the AP and the STA as an example for description. As shown in FIG. 13, the method 1300 includes the following steps.

S1310: An AP determines a PPDU #A, where the PPDU #A is used for time synchronization between a plurality of STAs, the PPDU #A includes a synchronization field, the synchronization field includes a synchronization padding subfield and at least one synchronization subfield, and the synchronization padding subfield is before the at least one synchronization subfield.

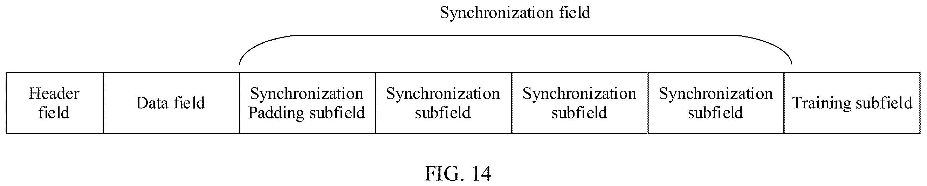

Specifically, in S1310, for a frame structure of the PPDU #A, refer to FIG. 14. As shown in FIG. 14, the PPDU #A includes a header field (header field), a data field (data field), a synchronization field (synchronization field), and a training field (training field). The synchronization field includes a synchronization padding subfield (synchronization padding subfield) and three synchronization subfields (synchronization subfield), and each synchronization subfield corresponds to one STA ID. Each STA determines a corresponding synchronization subfield based on a STA ID of a request frame in a handshake process. In addition, for descriptions of the header field, the data field, the training field, and the like, refer to an existing standard. Details are not described herein.

In a possible implementation, the training field in the PPDU #A may be used for sensing training of a sensing measurement instance of the STA. The PPDU #A may be applied to a multistatic sensing measurement scenario. For descriptions of the multistatic sensing measurement scenario, refer to the foregoing descriptions. Details are not described herein again.

S1320: The AP sends the PPDU #A.

Specifically, the AP sends the PPDU #A to a STA 1 to a STA 3. The STA 1 obtains the synchronization padding subfield and a first synchronization subfield (the first synchronization subfield corresponds to a STA ID of the STA 1) in the synchronization field and the header field and the data field in the PPDU #A, the STA 2 obtains a second synchronization subfield (the second synchronization subfield corresponds to a STA ID of the STA 2) in the PPDU #A, and the STA 3 obtains a third synchronization subfield (the third synchronization subfield corresponds to a STA ID of the STA 3) in the PPDU #A. Correspondingly, the STA 1 determines a number of synchronization subfields based on NSTA and the STA ID, and further determines a start time of the training field located after the synchronization subfield. The STA 2 and the STA 3 determine, based on respective STA IDs of the STA 2 and the STA 3 and NSTA, the start time of the training field located after the synchronization subfield. Further, the STA 1 to the STA 3 perform time synchronization based on the PPDU #A, to complete the subsequent sensing measurement instance.

It may be understood that, the synchronization padding subfield in the PPDU #A is located before the synchronization subfield, so that a STA other than the STA 1 can directly determine the start time of the training field based on NSTA and STA ID, to implement the time synchronization between the plurality of STAs.

In a possible implementation, if the PPDU #A does not use the frame structure shown in FIG. 14, that is, the synchronization padding subfield in the PPDU #A is located at the end of the synchronization field, one or more of the following may be specified: a length of the data field is fixed, or a length of the data field is an integer multiple of a single carrier coding block (single carrier block); or a length of the synchronization field is an integer multiple of the length of the single carrier coding block; or a length sum of the synchronization field and the data field is an integer multiple of the length of the single carrier coding block. In this case, because the length of the data field is the integer multiple of the length of the single carrier coding block, and/or the length of the synchronization field is the integer multiple of the length of the single carrier coding block, the remaining STAs may deduce, based on NSTA, a length of the synchronization field that does not include the synchronization padding subfield. In addition, the length of the synchronization field and the length of the synchronization padding subfield are obtained by rounding up to a minimum integer multiple of the length of the single carrier coding block. In this case, the STA 2 and the STA 3 deduce the length of the synchronization field based on one or more of the foregoing information, to implement the time synchronization between the plurality of STAs.

It should be understood that length sum of the data field and the synchronization field may be determined based on a physical layer service data unit (physical layer service data unit, PSDU) subfield and a modulation and coding scheme (modulation and coding scheme, MCS) subfield in the header field.

In a possible implementation, if the PPDU #A does not use the frame structure shown in FIG. 14, the length of the synchronization padding subfield in the PPDU #A may be indicated through interaction in the foregoing methods 300 to 800. Specifically, each request frame may include one piece of indication information 2, and the indication information 2 indicates a length of the synchronization padding subfield in the PPDU #A. The indication information 2 may indicate at least one of the following: the length of the synchronization padding subfield, a length of the synchronization field, a length of the data field, a length sum T_{data} of the synchronization field and the data field, or a PSDU subfield and an MCS subfield, where the PSDU subfield and the MCS subfield are used to determine T_{data}.

Specifically, the length of the synchronization padding subfield in the synchronization field is exchanged in the foregoing handshake (air interface duration of the synchronization field is not affected by the MCS, and a number or a length (length=number of chips×chip duration) of chips (chips) of the synchronization padding subfield may be selected). In this way, after implementing time synchronization based on corresponding synchronization subfields, the STA and the STA 3 infer that there are still lengths of (NSTA-STA ID) subsequent synchronization subfields and the length of the synchronization padding subfield before starting TRN-T (that is, start of the TRN field).

In a possible implementation, a length of the synchronization field is exchanged in the foregoing handshake. As described above, the synchronization field includes NSTA synchronization subfields and the synchronization padding subfield. If the length of the synchronization field is exchanged, the STA may calculate a length of the synchronization padding subfield based on the NSTA synchronization subfields.

In a possible implementation, duration of T_{data} (or a PSDU length and an MCS are exchanged, and the STA may obtain T_{data} through calculation based on the two fields) and duration of the data field (or the data field, a PSDU length, and an MCS are exchanged) are exchanged in the foregoing handshake. The STA 2 and the STA 3 may calculate duration of the synchronization field based on T_{data} (or a PSDU length and an MCS that correspond to T_{data}) and duration of the data field (or a PSDU and an MCS that correspond to T_{data}).

It should be noted that, in the communication methods shown in FIG. 5 to FIG. 14, according to this application, the AP can periodically send the request frame (for example, based on the foregoing time period P). This can avoid adverse impact, caused by a station that fails in a handshake, on alignment of sending times of PPDUs of stations that succeed in handshakes. According to this application, the AP can include an indication field in a request frame sent to the STA, where the indication field indicates a sending time of a PPDU, or indicates a time length corresponding to padding of a response frame, or the like. This can avoid adverse impact, caused by a station that fails in a handshake, on alignment of sending times of PPDUs of stations that succeed in handshakes. According to this application, after the handshake is completed, the AP can further send the PPDU #A to the STA to indicate a sending time of each PPDU, so that sending times of PPDUs of a plurality of stations are aligned. Further, the PPDU #A may be further used to perform a sensing measurement instance of the stations (applied to a multistatic sensing scenario).

It should be further noted that, when the PPDU #A uses the frame structure shown in FIG. 14, according to this application, a plurality of stations that receive the PPDU #A can determine the start time of the training field, to complete time synchronization. If the PPDU #A does not use the frame structure shown in FIG. 10, according to this application, information about the length (or time length) of the synchronization padding subfield in the PPDU #A can be exchanged in the foregoing handshake interaction process, or a plurality of stations that receive the PPDU #A can determine the start time of the training field, to complete time synchronization. If the PPDU #A does not use the frame structure shown in FIG. 14, according to this application, length limitation can be performed on the data field and the synchronization field in the PPDU #A as described above, or a plurality of stations that receive the PPDU #A can determine the start time of the training field, to complete time synchronization.

In this embodiment of this application, if the AP fails to complete a handshake with a STA, the AP may restart a handshake interaction procedure until handshake interaction with each STA is completed.

The foregoing describes the methods in embodiments of this application, and the following describes corresponding apparatus embodiments.

To implement various functions in the foregoing methods provided in embodiments of this application, a terminal and a network device each may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

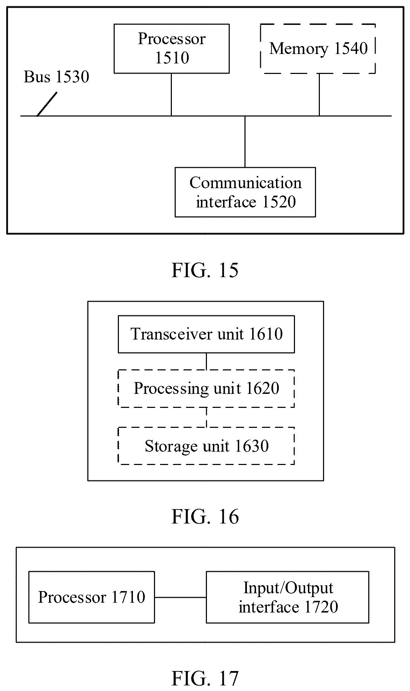

FIG. 15 is a block diagram of a communication apparatus 1500 according to an embodiment of this application. The communication apparatus 1500 includes a processor 1510 and a communication interface 1520. The processor 1510 and the communication interface 1520 may be connected to each other through a bus 1530. The communication apparatus 1500 may be configured to implement a function of an AP, or may be configured to implement a function of a STA.

Optionally, the communication apparatus 1500 further includes a memory 1540.

The memory 1540 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory is any other medium that can carry or store expected program code in a form of an instruction or a data structure and that can be accessed by a computer, but is not limited thereto. For example, the memory 1540 is configured to store related instructions and data.

In embodiments of this application, the processor may be a general-purpose processor, a digital signal processor, an application-specific integrated circuit, a field programmable gate array or another programmable logic device, a discrete gate or transistor logic device, or a discrete hardware component, and can implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and accomplished by a hardware processor, or may be performed and accomplished by using a combination of hardware and a software module in the processor. For example, the processor 1510 may be one or more central processing units (central processing units, CPUs). When the processor 1510 is one CPU, the CPU may be a single-core CPU, or may be a multi-core CPU.

When the communication apparatus 1500 is configured to implement the function of the AP, for example, the processor 1510 is configured to perform the following operations: sending a request frame 1 to a STA 1; and sending a request frame 2 to a STA 2.

The foregoing content is merely used as an example for description. When the communication apparatus 1500 is configured to implement the function of the AP, the communication apparatus 1500 is responsible for performing the AP-related methods or steps in the foregoing method embodiments.

When the communication apparatus 1500 is configured to implement the function of the STA, for example, the processor 1510 is configured to perform the following operations: receiving the request frame 1 from the AP; and sending a response frame 1 to the AP.

The foregoing content is merely used as an example for description. When the communication apparatus 1500 is configured to implement the function of the STA, the communication apparatus 1500 is responsible for performing the STA-related methods or steps in the foregoing method embodiments.

The foregoing descriptions are merely an example for description. For specific content, refer to the content shown in the foregoing method embodiments. In addition, for implementation of each operation in FIG. 15, refer to corresponding descriptions of the method embodiments shown in FIG. 3 to FIG. 14.

FIG. 16 is a block diagram of a communication apparatus 1600 according to an embodiment of this application. The communication apparatus 1600 may be the AP or STA in the foregoing embodiments, or may be a chip or module in the AP or STA, and is configured to implement the methods in the foregoing embodiments. The communication apparatus 1600 includes a transceiver unit 1610 and a processing unit 1620. The following describes the transceiver unit 1610 by using an example.

The transceiver unit 1610 may include a sending unit and a receiving unit that are respectively configured to implement a sending function or a receiving function in the foregoing method embodiments. The transceiver unit 1610 may further include a processing unit configured to implement a function other than the sending or receiving function.

When the communication apparatus 1600 is configured to implement a function of the AP, for example, the transceiver unit 1610 is configured to send a request frame 1 to a STA 1.

Optionally, the communication apparatus further includes a processing unit 1620, configured to perform the method or the step related to an operation like processing in the foregoing method embodiments.

Optionally, the communication apparatus 1600 further includes a storage unit 1630. The storage unit 1630 is configured to store a program or code used to perform the foregoing methods.

The foregoing content is merely used as an example for description. When the communication apparatus 1600 is configured to implement the AP, the communication apparatus 1600 is responsible for performing the AP-related methods or steps in the foregoing method embodiments.

The communication apparatus 1600 is the STA. For example, the transceiver unit 1610 is configured to receive the request frame 1 from the AP, and is further configured to send a response frame 1 to the AP.

Optionally, the communication apparatus further includes a processing unit 1620, configured to perform the method or the step related to an operation like processing in the foregoing method embodiments.

Optionally, the communication apparatus 1600 further includes a storage unit 1630, configured to store a program or code used to perform the foregoing methods.

The foregoing content is merely used as an example for description. When the communication apparatus 1600 is configured to implement the STA, the communication apparatus 1600 is responsible for performing the STA-related methods or steps in the foregoing method embodiments.

In addition, for implementation of each operation in FIG. 16, refer to corresponding descriptions of the content shown in the foregoing method embodiments. Details are not described herein again.

The communication apparatuses shown in FIG. 15 and FIG. 16 are configured to implement the content described in the foregoing method embodiments. Therefore, for specific execution steps and methods of the communication apparatuses shown in FIG. 15 and FIG. 16, refer to the content described in the foregoing method embodiments.

It should be understood that the foregoing transceiver unit may include the sending unit and the receiving unit. The sending unit is configured to perform a sending action of the communication apparatus, and the receiving unit is configured to perform a receiving action of the communication apparatus. For ease of description, in embodiment of this application, the sending unit and the receiving unit are combined into one transceiver unit. This is described herein once for all, and details are not described below again.

FIG. 17 is a diagram of a communication apparatus 1700 according to an embodiment of this application. The communication apparatus 1700 may be configured to implement a function of the AP or the STA in the foregoing methods. The communication apparatus 1700 may be a chip in the AP or STA. The communication apparatus 1700 includes an input/output interface 1720 and a processor 1710. The input/output interface 1720 may be an input/output circuit. The processor 1710 may be a signal processor, a chip, or another integrated circuit that can implement the methods in this application. The input/output interface 1720 is configured to input or output a signal or data.

For example, the communication apparatus 1700 is the AP, and the input/output interface 1720 is configured to send a request frame 1 to a STA 1. The processor 1710 is configured to determine a request frame. The processor 1710 is further configured to perform a part or all of steps of any method provided in this application.

For example, the communication apparatus 1700 is the STA, and the input/output interface 1720 is configured to receive the request frame 1 from the AP. The processor 1710 is configured to perform a part or all of steps of any method provided in this application.

In a possible implementation, the processor 1710 executes instructions stored in a memory, to implement the function implemented by the AP or the STA.

Optionally, the communication apparatus 1700 further includes the memory. Optionally, the processor and the memory are integrated together. Optionally, the memory is outside the communication apparatus 1700.

In a possible implementation, the processor 1710 may be a logic circuit, and the processor 1710 inputs/outputs a message or signaling through the input/output interface 1720. The logic circuit may be a signal processor, a chip, or another integrated circuit that can implement the methods in embodiments of this application.

The foregoing descriptions of the communication apparatus 1700 in FIG. 17 are merely an example for description. The communication apparatus 1700 can be configured to perform the methods in the foregoing embodiments. For specific content, refer to the descriptions in the foregoing method embodiments. Details are not described herein again.

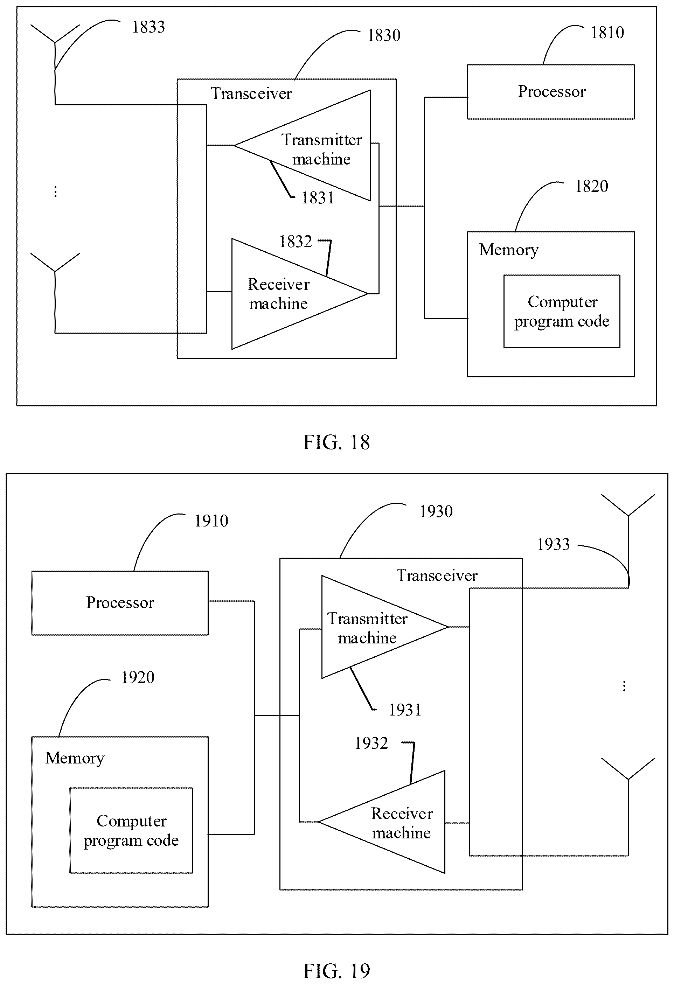

FIG. 18 is a block diagram of a communication apparatus 1800 according to an embodiment of this application. The communication apparatus 1800 may be an AP or a chip. The communication apparatus 1800 may be configured to perform an operation performed by the AP in the foregoing method embodiments.

When the communication apparatus 1800 is the AP, for example, a base station, FIG. 18 is a simplified diagram of a structure of the base station. The base station includes a part 1810, a part 1820, and a part 1830. The part 1810 is mainly configured to: perform baseband processing, control the base station, and the like. The part 1810 is usually a control center of the base station, may be usually referred to as a processor, and is configured to control the base station to perform a processing operation on a network device side in the foregoing method embodiments. The part 1820 is mainly configured to store computer program code and data. The part 1830 is mainly configured to receive or send a radio frequency signal, and perform conversion between the radio frequency signal and a baseband signal. The part 1830 may be usually referred to as a transceiver module, a transceiver machine, a transceiver circuit, a transceiver, or the like. The transceiver module in the part 1830 may also be referred to as a transceiver machine, a transceiver, or the like, and includes an antenna 1833 and a radio frequency circuit (not shown in FIG. 18). The radio frequency circuit is mainly configured to perform radio frequency processing. Optionally, in the part 1830, a component configured to implement a receiving function may be considered as a receiver machine, and a component configured to implement a sending function may be considered as a transmitter machine. In other words, the part 1830 includes a receiver machine 1832 and a transmitter machine 1831. The receiver machine may also be referred to as a receiving module, a receiver, a receiver circuit, or the like, and the transmitter machine may be referred to as a transmitting module, a transmitter, a transmitter circuit, or the like.

The part 1810 and the part 1820 may include one or more boards, and each board may include one or more processors and one or more memories. The processor is configured to read and execute a program in the memory, to implement a baseband processing function and control the base station. If there are a plurality of boards, the boards may be interconnected to improve a processing capability. In an optional implementation, the plurality of boards may share one or more processors, or the plurality of boards share one or more memories, or the plurality of boards share one or more processors at the same time.

In an implementation, the transceiver module in the part 1830 is configured to perform a receiving and sending-related process performed by a network device in the embodiments shown in FIG. 3 to FIG. 14. The processor in the part 1810 is configured to perform a processing-related process performed by the network device in the embodiments shown in FIG. 3 to FIG. 14.

In another implementation, the processor in the part 1810 is configured to perform a processing-related process performed by a communication device in the embodiments shown in FIG. 3 to FIG. 14.

In another implementation, the transceiver module in the part 1830 is configured to perform a receiving and sending-related process performed by a communication device in the embodiments shown in FIG. 3 to FIG. 14.

It should be understood that FIG. 18 is merely an example rather than a limitation. The network device including the processor, the memory, and the transceiver may not depend on the structures shown in FIG. 15 to FIG. 17.

When the communication apparatus 1800 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

FIG. 19 is a block diagram of a communication apparatus 1900 according to an embodiment of this application. The communication apparatus 1900 may be a STA, a processor of the STA, or a chip. The communication apparatus 1900 may be configured to perform an operation performed by the STA in the foregoing method embodiments.

When the communication apparatus 1900 is the STA, FIG. 19 is a simplified diagram of a structure of a STA (which is a terminal device). As shown in FIG. 19, the STA includes the processor, a memory, and a transceiver. The memory may store computer program code. The transceiver includes a transmitter machine 1931, a receiver machine 1932, a radio frequency circuit (not shown in FIG. 19), an antenna 1933, and an input/output apparatus (not shown in FIG. 19).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, the processor performs baseband processing on to-be-sent data, and outputs a baseband signal to the radio frequency circuit. After performing radio frequency processing on the baseband signal, the radio frequency circuit sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 19 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 19, the terminal device includes a processor 1910, a memory 1920, and a transceiver 1930. The processor 1910 may also be referred to as a processing unit, a processing board, a processing module, a processing apparatus, or the like. The transceiver 1930 may also be referred to as a transceiver unit, a transceiver machine, a transceiver apparatus, or the like.

Optionally, in the transceiver 1930, a component configured to implement a receiving function may be considered as a receiving module, and a component configured to implement a sending function may be considered as a sending module. In other words, the transceiver 1930 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1910 is configured to perform a processing action on a STA side in the embodiments shown in FIG. 3 to FIG. 14, and the transceiver 1930 is configured to perform receiving and sending actions on the STA side in FIG. 3 to FIG. 14.

For example, in an implementation, the processor 1910 is configured to perform a processing action on a terminal device side in the embodiments shown in FIG. 3 to FIG. 14, and the transceiver 1930 is configured to perform receiving and sending actions on the STA side in FIG. 3 to FIG. 14.

It should be understood that FIG. 19 is merely an example rather than a limitation. The terminal device including the transceiver module and the processing module may not depend on the structures shown in FIG. 15 to FIG. 17.

When the communication apparatus 1900 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor, configured to invoke, from a memory, and run instructions stored in the memory, for a communication device in which the chip is installed to perform the methods in the foregoing examples.

This application further provides another chip, including an input interface, an output interface, and a processor. The input interface, the output interface, and the processor are connected to each other through an internal connection path, the processor is configured to execute code in a memory, and when the code is executed, the processor is configured to perform the methods in the foregoing examples. Optionally, the chip further includes the memory. The memory is configured to store a computer program or code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

In the descriptions of embodiments of this application, unless otherwise specified, "a plurality of" means two or more. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example, an illustration, or a description.

Unless otherwise specified, "/" in the descriptions of embodiments of this application represents an "or" relationship between associated objects. For example, A/B may represent A or B. In this application, "and/or" represents only an association relationship for describing associated objects and represents that three relationships may exist. For example, A and/or B may represent the following three cases: Only A exists, both A and B exist, and only B exists. A and B may be singular or plural.

Sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be another division manner during actual implementation. For example, a plurality of units or components may be combined or integrated into another system, or some features may be ignored or not performed.

In addition, the displayed or discussed mutual couplings or direct couplings or communication connections may be implemented through a part of interfaces. The indirect couplings or communication connections between the apparatuses or units may be implemented in an electronic form, a mechanical form, or another form.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the terminal device, an access network device, or a core network device may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application may be performed.

## Claims

1. A communication method, comprising:
sending a first request frame, wherein the first request frame is used to request a first station to participate in a sensing measurement instance; and
sending a second request frame when no first response frame is received, wherein the second request frame is used to request a second station to participate in the sensing measurement instance, wherein
the first response frame is a response to the first request frame, and
there is an interval of one time period between a sending time of the second request frame and a sending time of the first request frame.

2. The method according to claim 1, wherein
that no first response frame is received comprises:
receiving no first response frame in a first time; and
sending the second request frame comprises:
sending the second request frame after a second time elapses, wherein
a sum of the first time and the second time is equal to the time period.

3. The method according to claim 1 or 2, wherein the time period comprises a time length of one response frame and a time length of two short interframe spaces.

4. A communication method, comprising:
sending a first request frame, wherein the first request frame is used to request a first station to participate in a sensing measurement instance,
the first request frame comprises an indication field, and the indication field indicates a time at which the first station sends a first physical layer protocol data unit PPDU; and
receiving a first response frame, wherein the first response frame is a response to the first request frame.

5. The method according to claim 4, wherein
the indication field comprises information about the sending time of the first PPDU; or
the indication field comprises a number of stations from which an access point receives no response frame before the first request frame is sent.

6. A communication method, comprising:
sending a first request frame, wherein the first request frame is used to request a first station to participate in a sensing measurement instance,
the first request frame comprises an indication field, the indication field indicates a time length corresponding to padding of a first response frame, and the first response frame is a response to the first request frame; and
receiving the first response frame.

7. The method according to claim 6, wherein the indication field comprises a number of stations from which an access point receives no response frame before the first request frame is sent.

8. The method according to any one of claims 1 to 7, wherein the method further comprises:
sending a second PPDU, wherein the second PPDU is used for time synchronization between stations, wherein
the first request frame comprises indication information, and the indication information indicates a length of a synchronization padding subfield of the second PPDU.

9. The method according to claim 8, wherein
the second PPDU further comprises a data field, a synchronization field, a physical layer service data unit PSDU subfield, and a modulation and coding scheme MCS subfield, the synchronization field comprises the synchronization padding subfield, and
the indication information comprises at least one of the following:
a length of the synchronization padding subfield, a length of the synchronization field, a length of the data field, a length sum of the synchronization field and the data field, or the PSDU subfield and the MCS subfield, wherein the PSDU subfield and the MCS subfield are used to determine the length sum.

10. The method according to claim 8 or 9, wherein the second PPDU further comprises a training field, and the training field is used for sensing.

11. A communication method, comprising:
determining a first physical layer protocol data unit PPDU, wherein the first PPDU is used for time synchronization between stations,
the first PPDU comprises a synchronization field, the synchronization field comprises a synchronization padding subfield and at least one synchronization subfield, and the synchronization padding subfield is before the at least one synchronization subfield; and
sending the first PPDU.

12. The method according to claim 11, wherein the first PPDU further comprises a training field, and the training field is used for sensing.

13. A communication method, comprising:
determining a first physical layer protocol data unit PPDU, wherein the first PPDU is used for time synchronization between stations, the first PPDU comprises a data field and a synchronization field, and
a length of the data field is fixed; or
a length of the data field is an integer multiple of a single carrier coding block; or
a length of the synchronization field is an integer multiple of the length of the single carrier coding block; or
a length sum of the synchronization field and the data field is an integer multiple of the length of the single carrier coding block; and
sending the first PPDU.

14. The method according to claim 13, wherein the first PPDU further comprises a training field, and the training field is used for sensing.

15. A communication method, comprising:
sending a first request frame, wherein the first request frame is used to request a first station to participate in a sensing measurement instance; and
sending a second request frame when no first response frame is received, wherein the second request frame is used to request a second station to participate in the sensing measurement instance, and the first response frame is used to respond to the first request frame, wherein
the second request frame is a request frame obtained through first padding, the second request frame comprises first information, and the first information indicates a length, obtained before the first padding, of the second request frame.

16. The method according to claim 15, wherein the first information comprises a length corresponding to the first padding.

17. The method according to claim 15, wherein the first information comprises an air interface length, obtained before the first padding, of the second request frame.

18. The method according to claim 15, wherein the first information comprises a number, obtained before the first padding, of symbol blocks in the second request frame.

19. A communication method, comprising:
receiving a first request frame, wherein the first request frame is used to request a first station to participate in a sensing measurement instance,
the first request frame comprises an indication field, and the indication field indicates a time at which a first physical layer protocol data unit PPDU is sent; and
sending a first response frame, wherein the first response frame is a response to the first request frame.

20. The method according to claim 19, wherein
the indication field comprises information about the sending time of the first PPDU; or
the indication field comprises a number of stations from which an access point receives no response frame before the first request frame is sent.

21. The method according to claim 20, wherein
the sending time of the first PPDU=(NSTA-STA ID)*(2*short interframe space+time length of one request frame+time length of one response frame)+N*(time length of one response frame+2*time length of a short interframe space-T), wherein
N indicates the number of stations from which the access point receives no response frame, T indicates a time interval between a sending time of the first request frame and a sending time of a second request frame, the second request frame is used to request a second station to participate in the sensing measurement instance,
NSTA indicates a number of stations participating in the sensing measurement instance, and STA ID indicates a ranking of the first station in the number of stations participating in the sensing measurement instance.

22. A communication method, comprising:
receiving a first request frame, wherein the first request frame is used to request a first station to participate in a sensing measurement instance,
the first request frame comprises an indication field, the indication field indicates a time length corresponding to padding of a first response frame, and the first response frame is a response to the first request frame; and
sending the first response frame.

23. The method according to claim 22, wherein the indication field indicates a number of stations from which an access point receives no response frame before the first request frame is sent.

24. The method according to claim 23, wherein
the time length corresponding to the padding of the first response frame=N*(time length of one response frame+2*time length of a short interframe space-T), wherein
N indicates the number of stations from which the access point receives no response frame, T indicates a time interval between a sending time of the first request frame and a sending time of a second request frame, and the second request frame is used to request a second station to participate in the sensing measurement instance.

25. The method according to any one of claims 19 to 24, wherein the method further comprises:
receiving a second PPDU, wherein the second PPDU is used for time synchronization between stations; and
performing time synchronization based on the second PPDU, wherein
the first request frame includes indication information, and the indication information indicates a time length of a synchronization padding subfield of the second PPDU.

26. The method according to claim 27, wherein
the second PPDU further comprises a data field, a synchronization field, a physical layer service data unit PSDU subfield, and a modulation and coding scheme MCS subfield, the synchronization field comprises the synchronization padding subfield, and
the indication information comprises at least one of the following:
a length of the synchronization padding subfield, a length of the synchronization field, a length of the data field, a length sum of the synchronization field and the data field, or the PSDU subfield and the MCS subfield, wherein the PSDU subfield and the MCS subfield are used to determine the length sum.

27. The method according to claim 25 or 26, wherein the second PPDU further comprises a training field, and the training field is used for sensing.

28. A communication method, comprising:
receiving a first physical layer protocol data unit PPDU, wherein the first PPDU is used for time synchronization between stations,
the first PPDU comprises a synchronization field, the synchronization field comprises a synchronization padding subfield and at least one synchronization subfield, and the synchronization padding subfield is before the at least one synchronization subfield; and
performing time synchronization based on the first PPDU.

29. The method according to claim 28, wherein the first PPDU further comprises a training field, and the training field is used for sensing.

30. A communication method, comprising:
receiving a first physical layer protocol data unit PPDU, wherein the first PPDU is used for time synchronization between stations, the first PPDU comprises a data field and a synchronization field, and
a length of the data field is fixed; or
a length of the data field is an integer multiple of a single carrier coding block; or
a length of the synchronization field is an integer multiple of the length of the single carrier coding block; or
a length sum of the synchronization field and the data field is an integer multiple of the length of the single carrier coding block; and
performing time synchronization based on the first PPDU.

31. The method according to claim 30, wherein the first PPDU further comprises a training field, and the training field is used for sensing.

32. A communication method, comprising:
receiving a first request frame, wherein the first request frame is used to request a second station to participate in a sensing measurement instance, the first request frame is a request frame obtained through first padding, the first request frame comprises first information, and the first information indicates a length, obtained before the first padding, of the first request frame; and
determining a sending time of a first PPDU based on the first information, wherein a sending time of the first PPDU is aligned with a sending time of a second PPDU, the second PPDU is a PPDU sent by the second station, and the second station is a station that succeeds in a handshake.

33. The method according to claim 32, wherein the first information comprises a length corresponding to the first padding.

34. The method according to claim 32, wherein the first information comprises an air interface length, obtained before the first padding, of the first request frame.

35. The method according to claim 32, wherein the first information comprises a number, obtained before the first padding, of symbol blocks in the first request frame.

36. A communication apparatus, comprising a processor, wherein the processor is configured to enable, by executing a computer program or instructions or via a logic circuit, the communication apparatus to perform the method according to any one of claims 1 to 35.

37. The communication apparatus according to claim 36, wherein the communication apparatus further comprises a memory, and the memory is configured to store the computer program or the instructions.

38. The communication apparatus according to claim 36 or 37, wherein the communication apparatus further comprises a communication interface, and the communication interface is configured to input and/or output a signal.

39. A communication apparatus, comprising a logic circuit and an input/output interface, wherein the input/output interface is configured to input and/or output a signal, and
the logic circuit is configured to perform the method according to any one of claims 1 to 35.

40. A computer-readable storage medium, wherein the computer-readable storage medium stores a computer program or instructions, and
when the computer program or the instructions are run on a computer, the method according to any one of claims 1 to 35 is performed.

41. A computer program product, comprising instructions, wherein when the instructions are run on a computer, the method according to any one of claims 1 to 35 is performed.
